# EUROPEAN PATENT SPECIFICATION

(11) **EP 4 008 167 B1**
(45) Date of publication and mention of the grant of the patent: **06.09.2023**
(21) Application number: 21211795.6
(22) Date of filing: 01.12.2021
(51) Int. Cl.: A01B 79/00, A01G 17/00, A01G 7/00, G06Q 50/02

(54) **GENERATING CHARACTERISTICS DATA OF AN AGRICULTURAL FIELD ADAPTED FOR PRECISION FARMING**
ERZEUGUNG VON CHARAKTERISTISCHEN DATEN EINES LANDWIRTSCHAFTLICHEN FELDES FÜR PRÄZISIONSLANDWIRTSCHAFT
GÉNÉRATION DE DONNÉES CARACTÉRISTIQUES D'UN CHAMP AGRICOLE ADAPTÉ À L'AGRICULTURE DE PRÉCISION

(30) Priority: 04.12.2020 GB 202019185
(43) Date of publication of application: 08.06.2022
(73) Proprietor: Canon Research Centre France, 35510 Cesson-Sévigné (FR)
(72) Inventor: THOUMY, François, 35630 VIGNOC (FR); MAJANI, Eric, 56370 SARZEAU (FR)
(74) Representative: Santarelli

(56) References cited:
- US-A1- 2014 099 000
- US-A1- 2019 069 475
- NORASHIKIN M THAMRIN ET AL: "Simultaneous localization and mapping based real-time inter-row tree tracking technique for unmanned aerial vehicle", CONTROL SYSTEM, COMPUTING AND ENGINEERING (ICCSCE), 2012 IEEE INTERNATIONAL CONFERENCE ON, IEEE, 23 November 2012 (2012-11-23), pages 322-327, XP032348997, DOI: 10.1109/ICCSCE.2012.6487164 ISBN: 978-1-4673-3142-5

## Description

### FIELD OF THE INVENTION

The field of the invention is precision framing.

### BACKGROUND OF THE INVENTION

One aspect of precision agriculture is the health monitoring of single plants, as they may impact the health of neighbor plants.

One example in precision viticulture is the mandatory monitoring of the plants showing symptoms of the grapevine yellows disease.

In another example, the grower may observe a symptom on a plant which requires diagnosis by a specialist of the cause of the symptom so that a required action is to be taken. The grower should be able to identify the plant on which the symptom was observed and to direct the specialist to it to make his diagnosis.

In both examples, there is a need to identify the precise location of a plant, and return to it. GPS coordinates do not suffice and are not as meaningful to humans as the absolute or relative position of a plant to other plants or to posts in a given row.

In addition to the precise location of all plants, the total number of plants within a row or within a plot or a parcel, as well as the total number of rows in a parcel are valuable. The total number of plants within a parcel is helpful to estimate the total production of the crop, based on estimates of production per plant from measurements in the parcel. The total number of plants for each row is helpful to estimate precisely the inter-line distance, based on estimates of the length of the row. The total number of rows is helpful to estimate precisely the inter-row distance, based on estimates of the width of the parcel.

All these points show a clear need in precision agriculture for a precise description of the parcel in terms of its characteristics, such as the position of all of its plants.

It is with respect to these needs and other general considerations that the following embodiments have been described. Also, although relatively specific problems have been discussed, it should be understood that the embodiments should not be limited to solving the specific problems identified in the background.

### SUMMARY OF THE INVENTION

The invention relates generally to determining characteristics data of an agricultural field comprising aligned plant locations. For example, characteristics data may comprise one or more of the following: the location of every plant of the field, the total number of plants within a row or within a plot or a parcel, the total number of rows, etc.

One aspect of the present invention relates to a method of determining characteristics data of the agricultural field, the method comprising:
receiving, from a user interface, user inputs including a succession of displacement data, wherein the succession of displacement data maps plant locations at a boundary of the agricultural field; and
determining characteristics data of the agricultural field based on at least the succession of displacement data included in the received user inputs.

Another aspect of the invention relates to a non-transitory computer-readable medium storing a program which, when executed by a microprocessor or computer system in a wireless device, causes the wireless device to perform any method as defined above.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a hard disk drive, a magnetic tape device or a solid-state memory device and the like. A transient carrier medium may include a signal such as an electrical signal, an electronic signal, an optical signal, an acoustic signal, a magnetic signal or an electromagnetic signal, e.g. a microwave or RF signal.

### BRIEF DESCRIPTION OF THE DRAWINGS

Embodiments of the invention will now be described, by way of example only, and with reference to the following drawings in which:
**Figure 1** illustrates an aligned plantation in a (row, line) coordinate system represented by a 2D (row, line) grid;
**Figure 2** illustrates, using a flowchart, general steps for determining the characteristics data;
**Figure 3a** illustrates, using a flowchart, a method for determining characteristics data of an agricultural field according to a first embodiment of the invention;
**Figure 3b** illustrates, using a flowchart, an implementation for determining the plant locations of the boundary surrounding the field based on displacement orientations and displacement steps obtained from received user inputs;
**Figure 4a** illustrates an example of a simple user interface which can be used to receive user inputs;
**Figure 4b** illustrates the agricultural field in which the plant locations of a boundary are determined as a result of the execution of the flowchart of **Figure 3b****;**
**Figure 4c** shows a truncated sequence of user inputs and computed coordinates;
**Figure 5a** illustrates an example of an elaborated user interface which can be used to receive user inputs, and in particular displacement data;
**Figure 5b** illustrates the agricultural field in which the plant locations of a boundary are determined as a result of the execution of the flowchart of **Figure 3b****;**
**Figure 5c** shows the whole sequence of user inputs needed to determine the ordered list of boundary plant locations;
**Figure 6a** illustrates the agricultural field in which the plant locations at the ends of row segments are shown as white-filled circles;
**Figure 6b** is an example of user interface for receiving user inputs;
**Figures 6c, 6d** and **6e** show the user interface display status and the content of a row segment ends memory at three particular steps of the tour around the parcel;
**Figure 7** illustrates, using a flowchart, a method for determining a plantation map of a parcel from recorded row segment ends according to second embodiments of the invention;
**Figure 8** shows an example of algorithm to compute the number of plant locations in a parcel from the list of row segments according to second embodiments of the invention;
**Figure 9** illustrates the case where the user starts the tour from a location which is not the bottom left hand corner of the parcel;
**Figure 10** illustrates, using a flowchart, one implementation of coordinate system normalization;
**Figure 11** shows an example of user interface which can be used to record data about the locations of the row segments ends;
**Figure 12** shows a table that summarizes user inputs according to user moves according to third embodiments of the invention;
**Figures 13a** and **13b** show a recording process during a user tour around two parcel examples;
**Figure 14** illustrates the processing of data recorded with a user interface to get the row segment ends coordinates according to third embodiments of the invention;
**Figures 15a** and **15b** illustrate the concept of plant zones used in embodiments of the invention;
**Figures 16a** and **16b** show two user interface examples which may be used to input data according to fourth embodiments of the invention;
**Figure 17** illustrates the process followed by a user to collect data according to fourth embodiments of the invention;
**Figure 18** illustrates the course of the user around an example parcel using plant zones;
**Figures 19** and **20** illustrate a user interface appearance with the values of the recorded plant location counts all around the parcel;
**Figure 21** shows the algorithm to get the row segment end coordinates from the recorded data;
**Figures 22** and **23** show an algorithm to get the row segment end coordinates from the recorded data according to fifth embodiments; and
**Figure 24** is a schematic block diagram of a computing device for implementing one or more embodiments of the invention.

### DETAILED DESCRIPTION OF EMBODIMENTS

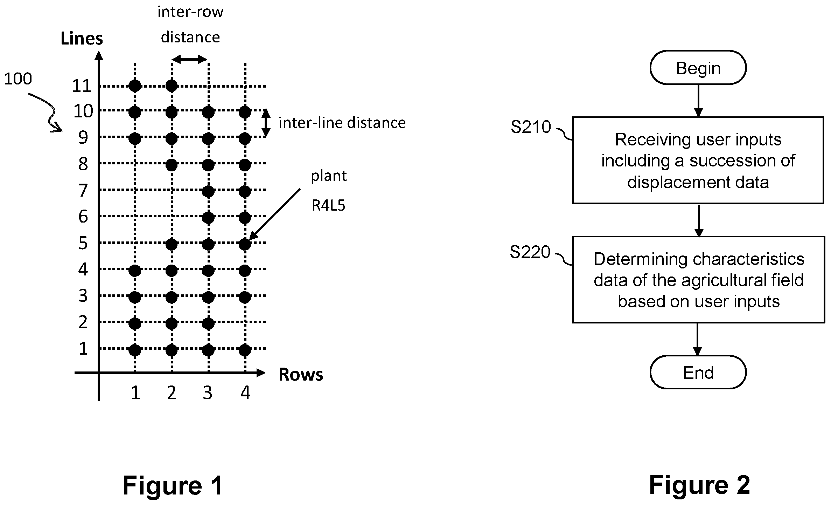

**Figure 1** illustrates an agricultural field comprising aligned plant locations. The aligned plant locations are mapped to a 2D (row, line) coordinate system 100 represented by a grid (referred to as (R, L) or RL coordinate system).

Note that reference is made in this disclosure to plant locations instead of plants as it may happen that a plan is absent (e.g. dead plant) while its location is present. Thus, it may be more accurate to account for locations in the agricultural field instead of plants. Of course, all described embodiments and their variants still apply by considering plants instead of plant locations.

In an aligned plantation, plant locations are substantially aligned in both the row and line dimensions. One plant location is aligned with the other plant locations in the same row, as well as with the other plant locations from other rows but in the same line. A plant location has typically four contiguous neighbors (except at the edge of the plantation); two in the same row, and two in the same line.

The distance between a pair of plant locations from two contiguous rows is referred to as inter-row distance. Identical spacing between rows is the norm due to the mechanization of agriculture that requires a regular alignment of plants. Similarly, the distance between a pair of plant locations from two contiguous lines is referred to as inter-line distance.

In the coordinate system 100, the unit in the row dimension is the inter-row distance and the unit in the line dimension is the inter-line distance. The position of a plant location may be uniquely identified by means of (row, line) coordinates. These 2D coordinates are also referred to as (R, L) or RL coordinates and their value represented as (r, I) or RrLI. For instance, the plant identified in **Figure 1** by the coordinates (4, 5) is named R4L5.

Due to the parcel's natural boundaries, a row may not be continuous and may consist of disjoint row segments of contiguous plant locations. For example, in **Figure 1****,** row 1 does not have any plant locations in lines 5 to 8, and has therefore two row segments: a first one from line 1 to 4, and a second one from line 9 to 11. Similarly, lines can be decomposed in discontinuous segments of contiguous plant locations called line segments.

Note that in the case of grapevine plantations, iron wires link the plants belonging to the same row segments. The identification of the row segments on the field is thus easy as they are formed by the sets of plant locations which are connected by wires.

In the case of a crop that does not use trellises, row and line direction can be decided arbitrarily.

Regarding crops with rectangular geometry, distances between the plant locations may be used to decide what are the row and line directions. Usually the distances between two rows are greater than the distances between two plant locations (inter-line) as machines run between two rows, along the line direction.

Regarding crops with square geometry (where the distance between two neighbor plants in one dimension is equal to the distance between two neighbor plants in the other dimension), row and line directions can be decided arbitrarily. The choice may be done considering the presence of another parcel closed to the considered parcel and the coordinate system used for its description.

The invention in its different embodiments relates generally to determining characteristics data of the plantation, such as a plantation map.

Once the positions of the plant locations in the coordinate system (plantation map) are determined, the plantation is fully defined. Other characteristics data may be derived from those precise positions such as the shape of the parcel, the surface or dimensions of the parcel considering the inter-line and inter-row distances, etc.

According to embodiments of the invention, characteristics data are determined by locating a subset of the plant locations of the field. Preferably, only plant locations or groups of plant locations (e.g. defined by zones) at a boundary of the agricultural field are chosen. This is particularly advantageous because it can be performed easily and effortlessly by a person just walking or driving around the parcel. It can also be well performed by an unmanned aerial vehicle (UAV) flying over the plantation's boundary, by a robot, or by any other means.

For example, it is enough to fully define the plantation map by knowing only the positions (R, L) of the two boundary ends of all row segments (named "row segment ends" or "ends of row segment"). Similarly, the plantation map may be fully defined by knowing only the positions (R, L) of the two boundary ends of all line segments. It is also possible to define the plantation map by knowing only the positions (R, L) of all plant locations or groups of plant locations along a boundary of the field, e.g. surrounding the parcel as it is easier to access.

**Figure 2** illustrates, using a flowchart, general steps for determining the characteristics data by locating only part of the plant locations in the coordinate system, in particular, plant locations at a boundary of the plantation.

The flowchart includes two general steps. At step S210, user inputs including a succession of displacements data are received from a user interface. The succession of displacement data maps plant locations at a boundary of the agricultural field. And at step S220, the characteristics data are determined based on, at least, the succession of displacement data included in the received user inputs.

A displacement data includes a displacement orientation along a row and/or line dimension, and a displacement step. The displacement step is an integer that may be equal to one, i.e. corresponding to an inter-row distance in the row dimension or to an inter-line distance in the line dimension, or that may be greater than one to represent a displacement that is multiple of the inter-row or inter-line distance. If the displacement orientation is along both row and line dimensions (i.e. some angle in between), the displacement step may be provided for one dimension, and a default step value (e.g. one) is applied for the other dimension. In a variant, one displacement step may be provided for each dimension.

The user interface adapted to receive user inputs may be implemented in any device in hardware and/or software such as a controller, a laptop, a smartphone, etc. The user interface may contain orientation buttons such as arrows (↑ ↓ ← →) representing possible orientations of the displacement. The user interface may further contain a numeric keypad for entering a displacement step.

User may enter via buttons of the user interface necessary data while making a single tour around the plantation. Data may include:
- counting plant locations at a boundary of the plantation: number of plant locations in a given zone, difference in number of plant locations between two contiguous rows or columns (e.g.: +3, -4), etc.
- entering orientation of a next plant location relatively to a current plant location.

User inputs are then translated according to embodiments of the invention into characteristics data such as a plantation map, position (coordinates) of plant location at row segment ends, etc.

### First embodiments

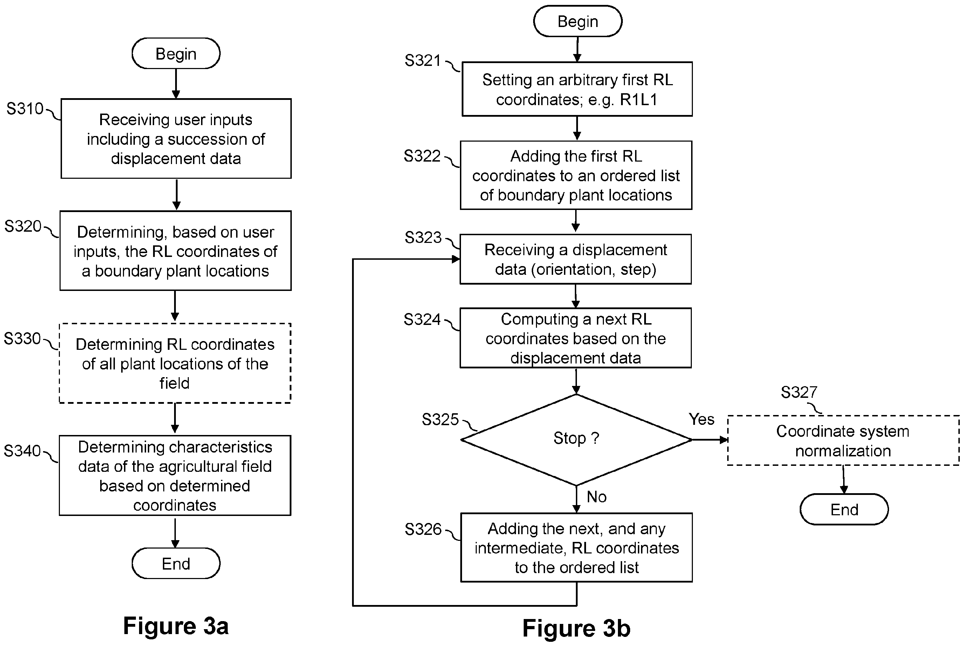

**Figure 3a** illustrates, using a flowchart, a method for determining characteristics data of an agricultural field according to first embodiments of the invention. In these first embodiments, the determining of the characteristics data is based on orientation/step displacement data only.

The method according to these first embodiments begins with a first step S310 that is similar to step S210 of receiving user inputs of the general embodiment described in **Figure 2****.**

At step S320, the RL coordinates of the plant locations of a boundary surrounding the field are determined based on user inputs. Details on one possible implementation of this step are provided with reference to **Figure 3b** described hereinbelow. The result obtained from executing the step may be in the form of an ordered list of plant locations defining the boundary.

At step S330, the RL coordinates of all plant locations of the field are determined considering the boundary plant locations as recorded by previous step S320. Step S330 is optional and its execution depends on the type of characteristics data that is to be determined. For example, this step may be needed for determining the plantation map to locate every plant location and may not be needed if just the number of plant locations in a row or in a line is to be determined.

At step S340, the characteristics data of the field are determined based on the determined coordinates, either those of the boundary plant locations (obtained from S320) or of all the plant locations of the field (obtained from S330). The characteristics data may include, without limitation, the RL coordinates of the plant locations of the parcel's boundary, the plantation map, the number of plant locations in a given line or in a given row, the number of rows or the number of lines in the parcel, the shape of the parcel's boundary, etc.

**Figure 3b** illustrates, using a flowchart, one implementation for determining the plant locations of the boundary surrounding the field based on displacement orientations and displacement steps obtained from the received user inputs.

In this embodiment, an ordered boundary list is constructed which comprises plant locations RrLI which are at the boundary of the parcel. The starting point of the list is arbitrary. Also, navigating along the plantation boundary may be clockwise or counter-clockwise.

At step S321, an arbitrary first RL coordinates are set and this first RL coordinates are added to the list of boundary plant locations (step S322). For example, the first RL coordinates may be set to R1L1.

When a displacement orientation and step are received (step S323), a next RL coordinates are determined based on these displacement data (S324). Before adding the determined next RL coordinates to the list (S326), a check is performed at step S325 to determine whether to stop the construction of the ordered list (and the collected/recording of the user input data) or not.

In one implementation, the stop condition is when the next RL coordinates are the same as the first RL coordinates, which means whether we closed the loop and we are back to the first position of the boundary. The stop condition in test S325 is fulfilled then when the starting position is reached again. If the next position is a new position, the new position is added to the list (S326), and the process continues. This variant advantageously allows to describe a closed loop boundary.

In a variant implementation, the process is interrupted based on a user input, such as pressing on an "End" command, otherwise the process continues. This variant advantageously allows to describe an open loop boundary.

Because the first position is set arbitrarily, a normalization of the coordinate system may optionally be performed at step S327 after the ordered list of boundary plant locations is completed. The normalization may include repositioning the plant location coordinates in the RL coordinate system by making a linear shift of all coordinates by RL offset values or any other transformation. Aim is for example to have only positive coordinate values.

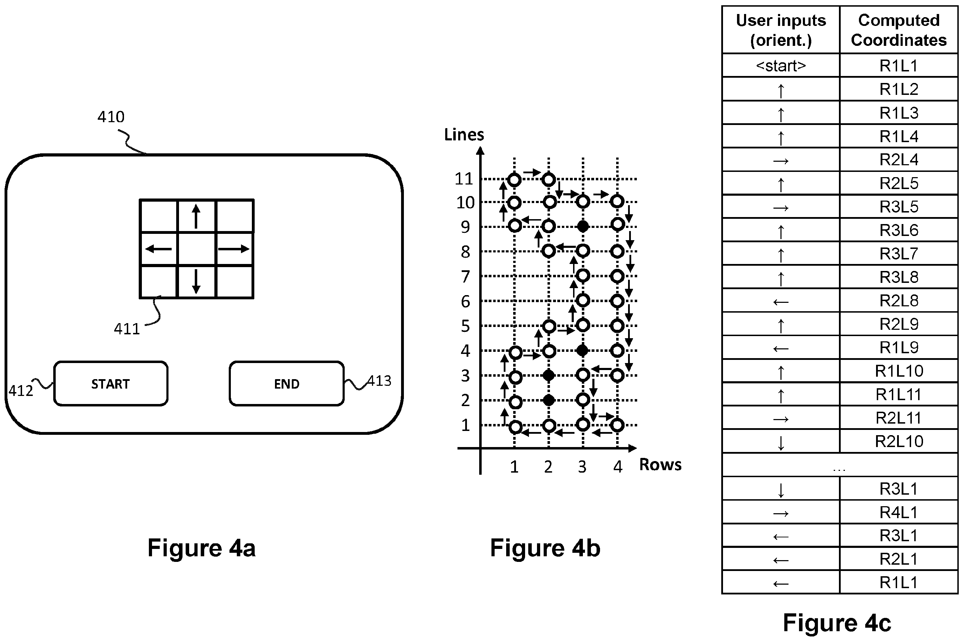

**Figure 4a** illustrates an example of a simple user interface which can be used to receive user inputs, and in particular displacement data.

The user interface 410 has a start button 412 that triggers the reception of user inputs and initializes the first position of the ordered list of boundary plant locations. Optionally, an end button 413 is included to signal the end of the collection of the inputs. The user interface also includes a set of buttons 411 to provide orientation information corresponding to the displacement orientation. The set may include for example four main orientation buttons (e.g. arrow symbols ↑ ↓ ← → or text indications such as "Up"/"Down"/"Left"/"Right"). It may further include four secondary buttons (not illustrated) for indicating diagonal orientations.

The orientations are relative to the coordinate system. It is preferable to substantially align one of the main orientations with either rows or lines of the plantation to ease entering data by the user in the system and avoiding orientation mistakes.

**Figure 4b** illustrates the agricultural field in which the plant locations of a boundary are determined as a result of the execution of the flowchart of **Figure 3b** with data entered by means of the user interface of **Figure 4a****.** The plant locations belonging to the boundary are shown as white-filled circles. Black-filled circles represent plant locations of the field not part of the boundary.

**Figure 4c** shows a truncated sequence of user inputs and computed coordinates. The user inputs include a "start" command initializing the first RL coordinates of the list to (1, 1) and a succession of displacement orientations. Note that the corresponding displacement step is set by default to one.

Displacement orientations from user inputs are then translated into a sequence of computed coordinates of plant locations in the coordinate system:
R1L1, R1L2, R1L3, R1L4, R2L4, R2L5, R3L5, R3L6, R3L7, R3L8, R2L8, R2L9, R1L9, R1L10, R1L11, R2L11, R2L10, R3L10, R4L10, R4L9, R4L8, R4L7, R4L6, R4L5, R4L4, R4L3, R3L3, R3L2, R3L1, R4L1, R3L1, R2L1, R1L1.

A boundary of plant locations is then derived from the above sequence, defined by the following list of ordered plant locations (same list except that the first position R1L1 is not included in the list when encountered again at the end of the path):
R1L1, R1L2, R1L3, R1L4, R2L4, R2L5, R3L5, R3L6, R3L7, R3L8, R2L8, R2L9, R1L9, R1L10, R1L11, R2L11, R2L10, R3L10, R4L10, R4L9, R4L8, R4L7, R4L6, R4L5, R4L4, R4L3, R3L3, R3L2, R3L1, R4L1, R3L1, R2L1.

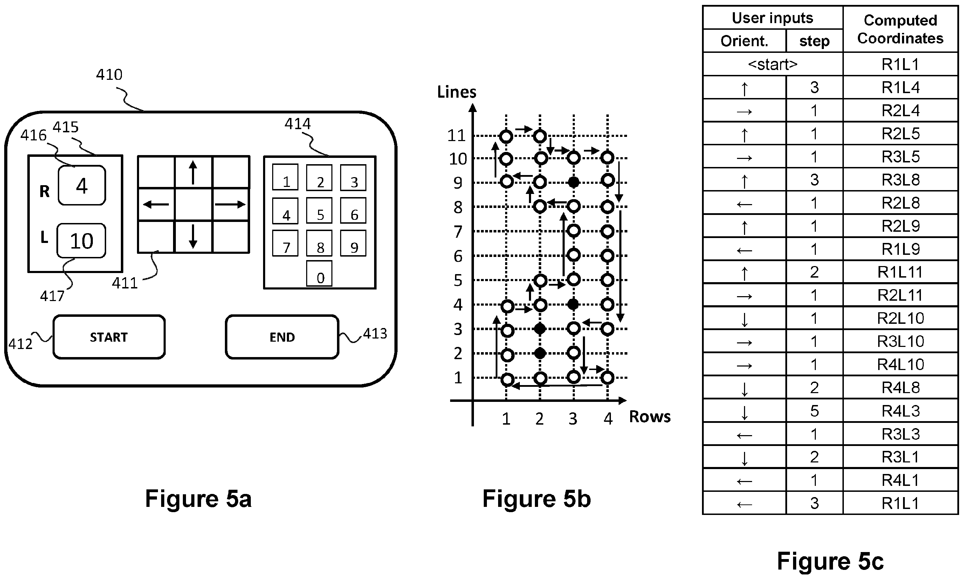

**Figure 5a** illustrates an example of an elaborated user interface which can be used to receive user inputs, and in particular displacement data.

The user interface has, in addition to user interface of **Figure 4a****,** a keyboard 414 to input a displacement step greater than one if needed, and an optional display 415 to show current row count (416) and line count (417) corresponding to computed coordinates.

**Figure 5b** illustrates the agricultural field in which the plant locations of a boundary are determined as a result of the execution of the flowchart of **Figure 3b** with data entered by means of the user interface of **Figure 5a****.** The plant locations belonging to the boundary are shown as white-filled circles. Black-filled circles represent plant locations of the field not part of the boundary.

**Figure 5c** shows the whole sequence of user inputs needed to determine the ordered list of boundary plant locations. The user inputs include a "start" command initializing the first RL coordinates of the list to (1, 1) and a succession of displacement orientations and steps. Note that if no displacement step is entered, default value of one is taken with the corresponding displacement orientation.

Displacement orientations and steps from user inputs are then translated into a sequence of computed coordinates of plant locations in the coordinate system:
R1L1, R1L4, R2L4, R2L5, R3L5, R3L8, R2L8, R2L9, R1L9, R1L11, R2L11, R2L10, R3L10, R4L10, R4L8, R4L3, R3L3, R3L1, R4L1, R1L1.

The above list contains RL coordinates computed based on the displacement data. The RL coordinates of this list correspond to next RL coordinates of the flowchart of **Figure 3b**. The list does not contain intermediate coordinates of plant locations along the path. The intermediate RL coordinates are then determined considering the continuity of the boundary, and added to the computed coordinates to form an ordered list of boundary plant locations, that is the same as the one given above with reference to **Figure 4c**.

Note that computed (next) RL coordinates do not necessarily coincide with a change in orientation in the boundary, but depend on user inputs. For example, row 4 in **Figure 5b** is described by three entered RL coordinates R4L10, R4L8, R4L3 (with R4L9 as an intermediate between R4L10 and R4L8, and R4L7, R4L6, R4L5 and R4L4 as intermediates between R4L8 and R4L3).

### Second embodiments

Second embodiments of the invention are described herein in which the plantation map is defined from the two ends positions (R, L) of the row segments. This embodiment may apply similarly when using line segments.

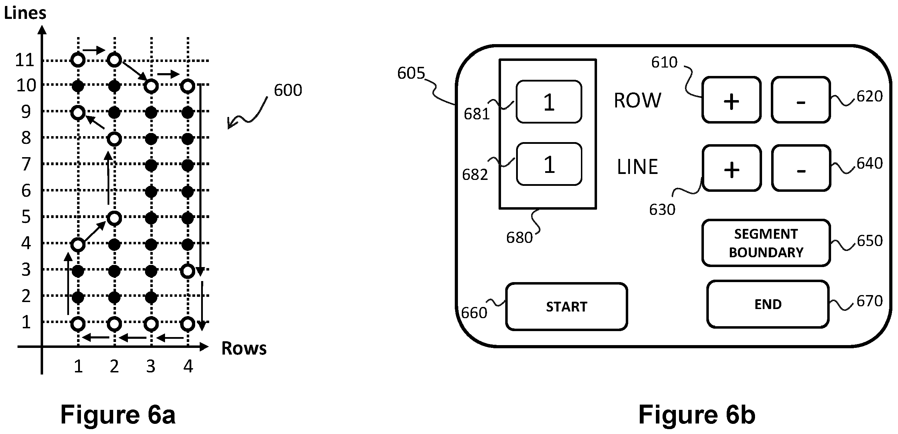

**Figure 6a** illustrates the agricultural field 600 in which the plant locations at the ends of row segments are shown as while-filled circles.

In this embodiment, an ordered list of plant locations RrLI corresponding to row segment ends is constructed. The starting row segment end point of the list is arbitrary, as well as whether the path along the plantation boundary is clockwise or counter-clockwise. In the following description, and without limitations, it is assumed that the starting row segment end is R1L1 and the path is clockwise.

The row segment ends (illustrated by white-filled circles in the field 600 of **Figure 6a**) are: R1L1, R1L4, R2L5, R2L8, R1L9, R1L11, R2L11, R3L10, R4L10, R4L3, R4L1, R4L1, R3L1, R2L1.

Note that as we are describing a closed boundary, the first and last plant locations in the list are identical (in alternate embodiments the boundary may be open). The last plant location is thus not recorded to differentiate it from an isolated plant.

Note also that the plant location R4L1 appears twice, as this single plant is a row segment by itself, with two identical row segment ends (single plant row segment).

For each plant location in the list, the user inputs a plant count. The input plant count is a count which is made relative to the previous plant location in the list.

The plant count input for each plant location of the ordered list is the number of plant locations that the current plant in the list is above or below, in the line dimension, the previous one in the list. In other words, it is the difference between the line number of the current plant location (row segment end) and the line number of the previous plant location (row segment end). The difference may be positive if the current plant location is above the previous one, negative if the current plant location is below the previous one, or null if the current plant location is in the same line as the previous one.

In the figure, plant locations corresponding to row segment ends are represented by white-filled circles and the others by black-filled circles.

While walking around the parcel, the user inputs data about the locations of the row segment ends. **Figure 6b** illustrates an example of a user interface for receiving user inputs.

For instance, assuming the user starts from the plant R1L1, he will successively input data about the locations of the row segment ends R1 L4, R2L5, R2L8, R1L9, R1 L11, R2L11...

The criteria to determine if a plant location is an end of a row segment is the absence of plant locations on one side of the considered plant location in the line direction (in case of a trellised crop, this plant location is easy to determine as an end post is close to it). The criteria to determine if a plant location is a single plant row segment is the absence of plant locations on both sides of the considered plant location in the line direction.

Starting from a given row segment end, the user increments or decrements the row and/or the line counter(s) with regards to the move he does to reach the next row segment end.

For instance, when the user moves from the starting location R1L1, to find the next row segment end, he has to walk along three Inter-line/intra-row distances which means he shall increment the line counter three times (the next row segment end has coordinates R1L4).

To find the next row segment end, he has to walk along one inter-row distance on the right and one Inter-line/intra-row distance upward which means he shall increment the row counter one time and the line counter one time (the third row segment end has coordinates R2L5).

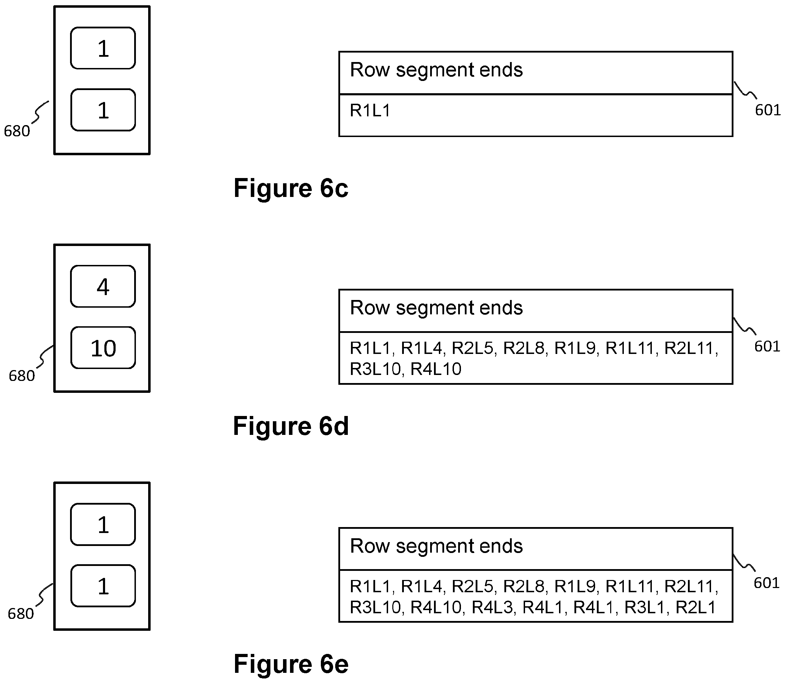

An illustration of the method to input and record data about the locations of the row segment ends is given in **Figures 6c** to **6e**.

**Figure 6b** illustrates an example of a basic user interface which can be used to input easily data about the locations of the row segment ends in the (row, line) coordinate system.

In the following, a description of a method to record the row segment ends using the basic user interface of **Figure 6b** is provided, according to an embodiment of the invention.

### 1. Coordinate system orientation

Before to start, the user chooses an orientation of the coordinate system and keep it all along the parcel boundary tour.

For instance, if the row orientation is North-South, he may decide that when he walks towards the North he increases the index of line and if he walks towards the South he decreases the index of line. Similarly, if the line orientation is East-West, he may decide that when he walks towards the East he increases the index of row and if he walks towards the West he decreases the index of row.

Note that the knowledge of the real orientation of the parcel is not required, it is given here just to illustrate the explanations.

When the user starts to walk around the parcel, he presses the "start" button (660);

### 2. Displacement recording

When the user moves along the boundary to look for the next row segment end,
- if he moves in the line direction (along a row), he inputs the number of inter-line distances he walks along by pushing "+" (630) button (in the above instance if he walks towards the North) or by pushing "-" (640) button (in the above instance if he walks towards the South) as many times as the number of inter-lines he walked along.
- Similarly, if he moves in the row direction he records the number of inter-row distances he walks along by pushing "+" (610) (in the above instance if he walks towards the East) or "-" (620) (in the above instance if he walks towards the West) button as many times as the number of inter-rows he walks along.
- When he reaches a row segment end, he presses the "Segment boundary" button (650) and continues to move toward the next row segment end.

### 3. When the user is back to the starting position, he presses the "end" button (670).

The user doesn't have to remember any coordinates; he has only to push the buttons 610, 620, 630, 640 and 650 in relation with the number and the orientation of inter-line and/or inter-row distances he has to go along from one row segment end to the next one.

User inputs received by means of the buttons 610 to 670 are used to update a line counter and a row counter and to record the RL coordinates of the locations of row segment ends.

When the user presses button 660, the line and row counters are initialized to '1' and '1' values. Each time the user presses button 610 (respectively 620) the row counter is incremented (respectively decremented) by one. Each time the user presses button 630 (respectively 640) the line counter is incremented (respectively decremented) by one. Each time the user presses button 650, the values of the row and line counters are recorded as the location of a new row segment end and these RL coordinates are recorded in an internal memory ("row segment ends" memory 601 illustrated in the figures described below).

When the user presses the "end" button (670), the system stops to record any action on the buttons. Methods to determine characteristics data such as the plantation map in RL coordinate system may then be started.

An optional display 680 is provided to show the values of the row (681) and line (682) counters. Displaying current values of the counters may help the user; for instance, to check if an action on a button has been considered and to see last entered RL coordinates.

**Figures 6c, 6d** and **6e** show the user interface display 680 status and the content of the "row segment ends" memory 601 at three particular steps of the tour around the parcel 600 example.

The parcel 600 is composed of 4 rows and 11 lines of potential plants positions, it embeds 36 plants positions distributed on 7 segments (one of them is an isolated plant).

The illustrated display 680 is that of the user interface 605 described in **Figure 6b****,** showing status of the row (681) and line (682) counters.

For sake of clarity, in these figures it is assumed that the user starts the parcel tour in the bottom left hand corner of the parcel, i.e. on plants location having coordinates (1, 1) on the actual plantation map. In fact, the user can start the tour in any row segment end location as a normalization step is included in the algorithm which creates the plantation map in RL coordinates.

**Figure 6c** shows display 680 status and memory 601 content at the beginning of the parcel tour, once the user has recorded the first row segment end.

The displayed values for the line/row counters are (1,1). Since the user pressed the Segment Boundary button, the coordinates R1L1 of this first row segment end has been recorded in memory 601.

**Figure 6d** shows display 680 status and memory 601 content when the user has recorded its move to row segment end which has coordinates (4,10).

The displayed values for the line/row counters are (4,10). As the user pressed the Segment Boundary button, the coordinates of this new row segment end are added to the list of coordinates already recorded in memory 601. The list includes the coordinates of all row segment ends identified since the beginning of the tour.

**Figure 6e** shows display 680 status and memory 601 content when the parcel tour is finished, once the user pressed the "End" button.

As the user is back to the starting point, the displayed status for the line/row counters are (1,1). As the user has just pressed the "End" button, the coordinates of this row segment end are not recorded in memory 601 (it has been already recorded at the beginning of the tour) and writing to memory 601 is disabled. At this point in time, the memory contains the coordinates of all the row segment ends identified from the data collected by the user during his walk around the parcel.

Next steps of the algorithm (e.g. generation of plantation map) may then be executed automatically or upon a further input from the user, such as pressing on a specific button (not represented here).

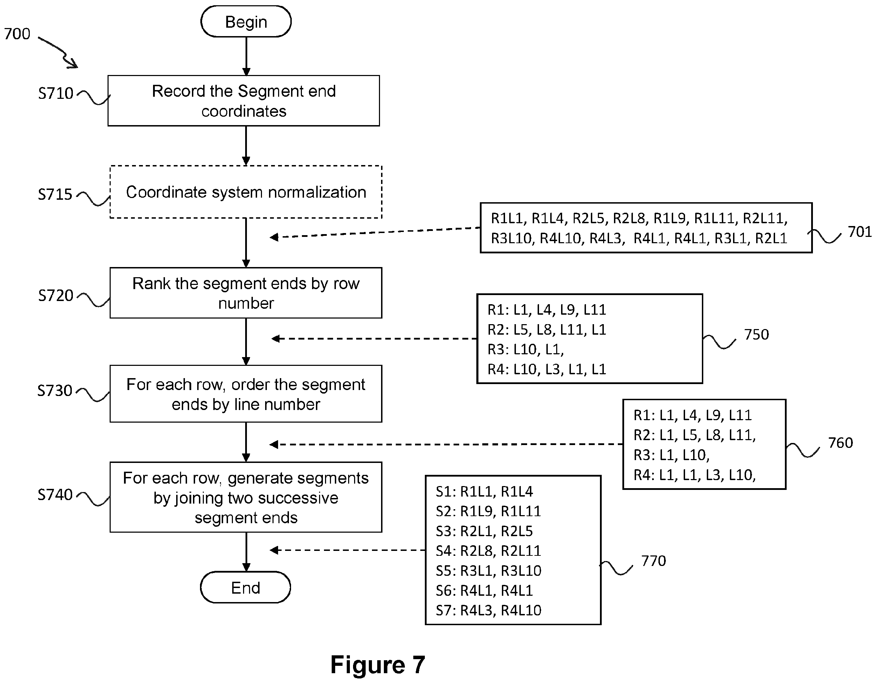

**Figure 7** illustrates, using a flowchart, a method for determining a plantation map of a parcel from recorded row segment ends according to second embodiments of the invention.

At step S710, coordinates of row segment ends are recorded as explained in the above description of **Figures 6b****,** **6c, 6d** and **6e****.**

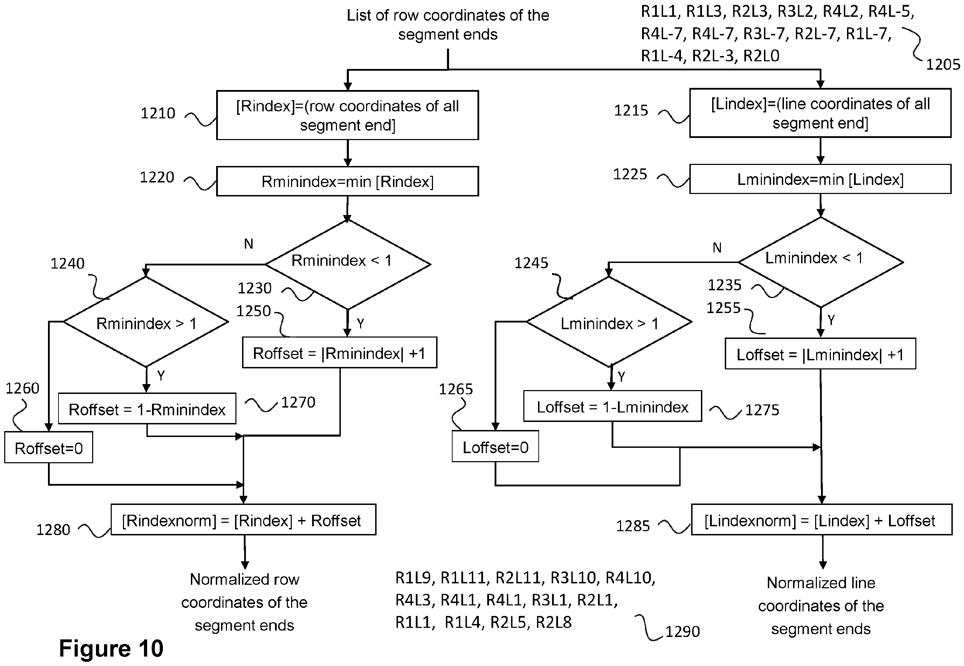

These coordinates may optionally be normalized at step S715. For example, the coordinates may be shifted so that they are all greater than one and make them easier to tackle by humans. One implementation of the normalization step S715 is described in **Figure 10****.**

Table 701 illustrates the content of memory after execution of step S715 if considering parcel 600 as example. Note that the content 701 is the same as the content of memory 601 since all coordinates were positive and the normalization did not modify the content.

At step S720, the coordinates of the row segment ends are sorted per row number. Result of the sorting is illustrated in table 750.

At step S730, for each row, the line coordinates of the segment ends are ordered. Table 760 illustrates ordered line numbers of segment ends for each row (R1, R2, R3, R4) of parcel 600.

At step S740, the different row segments are generated by joining, for each row, the two successive line coordinates of the row segment ends. Table 770 illustrates the output of this step where the row segments are labelled from S1 to S7.

As a result, and considering the example of parcel 600:
- the coordinates of the plant locations at the ends of the first row segment S1 are R1L1 and R1L4;
- the coordinates of the plant locations at the ends of the second row segment S2 are R1L9 and R1L11, and so on.

In this way, the algorithm has detected the seven row segments which actually compose the plantation map.

Note that, in the case of an isolated plant, and as the same coordinates are duplicated (both ends of the row segment have the same line coordinate), a row segment with a single plant can be detected (here segment S6).

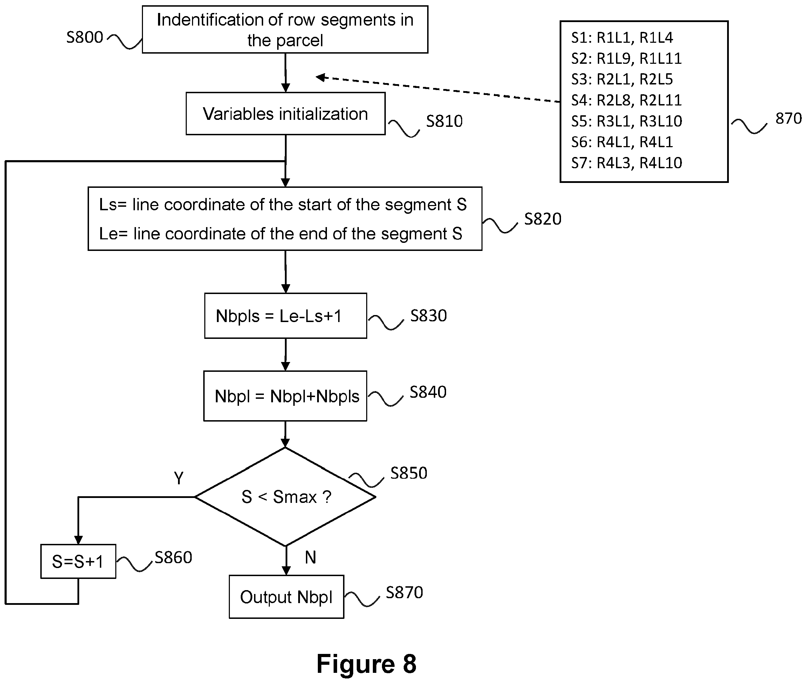

**Figure 8** shows an example of algorithm to compute the number of plant locations in a parcel from the list of row segments according to second embodiments of the invention. Note that here the characteristics data consists into the number of plant locations.

At step S800, the row segments of the parcel are identified. The method of **Figure 7** described above may be used to identify the row segments. Considering the example of parcel 600, 7 row segments are identified. They are represented in table 870 by the RL coordinates of the two ends of each row segment.

At step S810, the following algorithm variables are initialized: S, representing a row segment index, is initialized to 1; Nbpl, representing the number of plant locations, is initialized to 0 and Smax is set to the maximum number of row segments (7 in the present example).

At step S820, a variable Ls is set to the value of the line coordinate of the start of the row segment S and a variable Le is set to the value of the line coordinate of the end of the segment S.

At step S830, a variable Nbpls representing the number of plant locations in a row segment is computed as Nbpls= Le-Ls+1.

At step S840, the number of plant locations in the parcel Nbpl is updated: Nbpl= Nbpl + Nbpls.

At step S850, a test is performed to check if all row segments have been considered by comparing the variable S to Smax. If S is smaller than Smax, S is incremented (S860) and the process repeats at step S820, otherwise the number plant locations is obtained by Nbpl (S870).

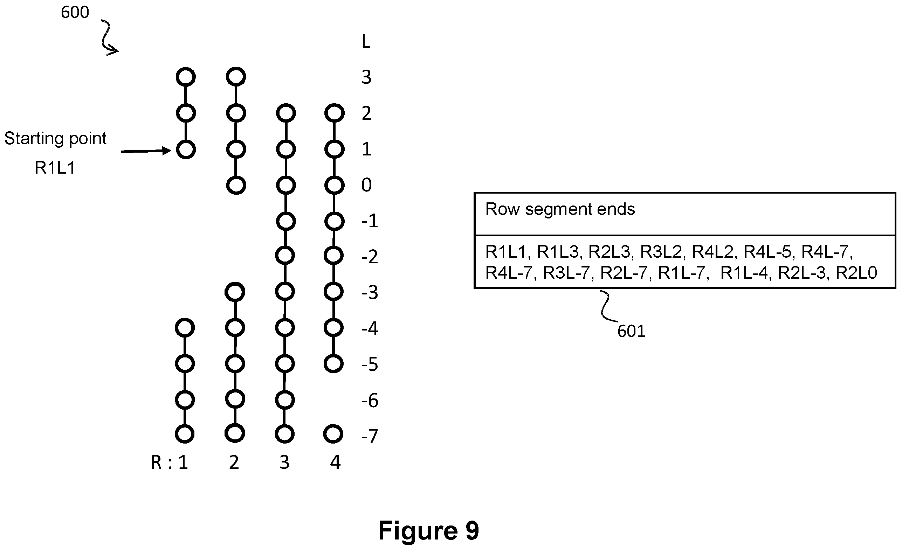

**Figure 9** illustrates the case where the user starts the tour from a location which is not the bottom left hand corner of the parcel. This leads to null or negative values for certain row and/or line coordinates.

In the illustrated example, the starting point is the bottom end of the second segment (S2) of the first row. When the user starts the process by pressing the start button, the values of the line counter and row counter are set to (1, 1) for this row segment end location.

Then the user moves along the boundary to record data about the locations of the row segment ends as explained in the description of **Figures 6b** to **6e****.** With regard to the new starting point, the values of the coordinates of the row segment ends recorded in the row segment ends memory 601 are: R1L1, R1L3, R2L3, R3L2, R4L2, R4L-5, R4L-7, R4L-7, R3L-7, R2L-7, R1L-7, R1L-4, R2L-3, R2L0.

**Figure 10** illustrates, using a flowchart, one implementation of coordinate system normalization to get positive coordinates for all plant locations whatever the starting point of the tour. This implementation may be used in step S715 of **Figure 7****.**

For illustration, it is assumed that the content of the row segment ends memory 601 is:
R1L1, R1L3, R2L3, R3L2, R4L2, R4L-5, R4L-7, R4L-7, R3L-7, R2L-7, R1L-7, R1L-4, R2L-3, R2L0.

The line and rows coordinates are processed separately but identically.

The steps 1210, 1220, 1230, 1240, 1250, 1260, 1270 and 1280 form the process applied on row coordinates while the steps 1215,1225, 1235, 1245, 1255, 1265, 1275 and 1285 form the process applied on line coordinates.

Only process applied to row coordinates is depicted below.

In step 1210 the row coordinates of all row segment ends are gathered in a table Rindex.

In step 1220 the lower index of row coordinates Rminindex is extracted: it is the minimum value of the table Rindex.

Next steps are tests to check if a normalization of the row coordinates is needed.

In step 1230, Rminindex is compared to one; if Rminindex is less than one, during next step 1250, an offset Roffset is computed as "absolute value of Rminindex plus one".

If Rminindex is not less than one, in step 1240, Rminindex is again compared to one; if Rminindex is more than one, during next step 1270, an offset Roffset is computed as "one minus Rminindex".

If Rminindex is equal to one (negative result of test done in step 1240), in next step 1260, an offset Roffset is set to zero (no need to correct the row coordinates).

The step following the steps 1250, 1260 and 1270 is the step 1280 where the offset Roffset is added to each row coordinate.

The output of the step 1280 is the normalized row coordinates set.

To illustrate the normalization process, as example, the list of coordinates 1205 which correspond to the case illustrated **Figure 9** is used as input of the process. The process output is the list of coordinates 1290.

Comparing this list 1290 with the list recorded in 601 when the user starts the tour from the bottom left hand corner location, one can see they are identical. Then, thanks to the normalization process, the plant locations can be depicted in the same "easy to manage" way (plant coordinate system starting from (1, 1) index with only positive values) whatever the starting point of the tour is.

### Third embodiments

Third embodiments are based on a data recording method similar to the one used in the second embodiments but using an alternative user interface where the direction of the moves is input using arrows and length (step) of the moves is given by numbers input through a digital keypad.

An advantage of these third embodiments is that they require less user actions in case of a long move from one row segment end to the next one. For instance, if the user walks along a long row which comprises 105 plant locations, he has just to indicate the direction of his move and enter the value '105' with the digital keypad, while with the user interface of the second embodiments (**Figure 6b**), he has to push the R+ or R- buttons 105 times.

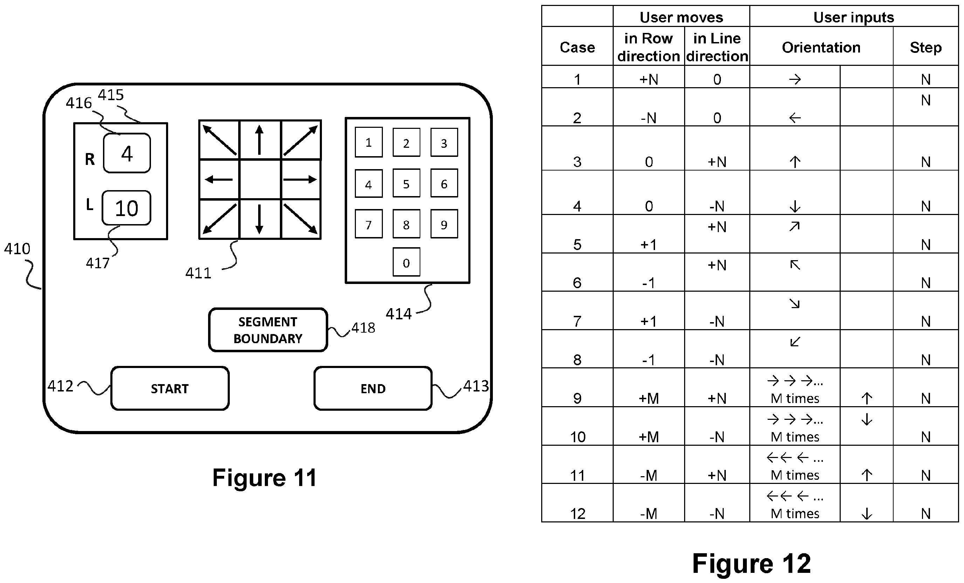

**Figure 11** shows an example of user interface which can be used to record data about the locations of the row segments ends in the (row, line) coordinate system in these third embodiments.

The user interface is similar to that of **Figure 5a** (same references kept for same items), with the addition of a "segment boundary" button 418. Also, the diagonal orientations are illustrated (411) in addition to the four main orientations.

**Figure 12** shows a table that summarizes user inputs according to user moves according to third embodiments of the invention.

Instead of indicating a user move in number of steps in line direction and number of steps in row direction by pressing many times the related buttons, the user indicates inputs a line and/or row orientation and a number of moves (displacement steps). The orientation is indicated using orientation buttons 411 and the number of steps using keypad 414 as illustrated in **Figure 11****.**

In these third embodiments, the process to record the moves is described in the following based on the use of the user interface illustrated in **Figure 11****.**

### 1. Coordinate system orientation

Before starting, the user chooses an orientation of the coordinate system and keep it all along the parcel boundary tour.

For instance, if the row orientation is North-South, he may decide that when he walks towards the North he increases the line index and if he walks towards the South he decreases the line index. Similarly, if the line orientation is East-West, he may decide that when he walks towards the East he increases the row index and if he walks towards the West he decreases the row index.

Note that the knowledge of the real orientation of the parcel is not required, it is given here just to illustrate the explanations.

When the user starts to walk around the parcel, he presses the start button (412);

### 2. Move recording

a. When the user walks along one direction only (line or row) he has to enter:
   - the orientation:
      ∘ if he goes in a row direction (case 1 and 2, **Figure 12**), he enters the orientation with left/right arrows (in the above instance right arrow if he walks towards the East and left arrow if he walks towards the West).
      ∘ if he goes in line direction (case 3 and 4), he enters the orientation with up/ down arrows (in the above instance, up arrow if he walks towards the North and down arrow if he walks towards the South);
   - the number N (step) of inter-line or inter-row distances he walked along.
b. When the user moves one row and N lines, he enters the orientation of the move using a diagonal arrow followed by the number of inter-lines distances he walked along. In the above instance,
   ∘ if he walks towards the North-East (case 5), he uses the up-right arrow and enters the number N of inter-line he walked along.
   ∘ if he walks towards the North-West (case 6), he uses the up-left arrow and enters the number N of inter-line distances he walked along.
   ∘ if he walks towards the South-East (case 7), he uses the down-right arrow and enters the number N of inter-line distances he walked along.
   ∘ if he walks towards the South-West (case 8), he uses the down-left arrow and enters the number N of inter-line distances he walked along.
c. When he moves M rows and N lines (cases 9 to 12), he enters:
   - the number of rows he moves along by pressing left/right arrow as many times as the number of rows, i.e. M times,
   - the orientation of the move in the line direction by pressing the up/down arrow,
   - the number of inter-line distances N he walked along using the keypad (414).

After entering this data, he presses the "Segment boundary" button (418) and continues to move toward the next row segment end.

### 3. When the user is back to the starting position, he presses the 'end' button (413).

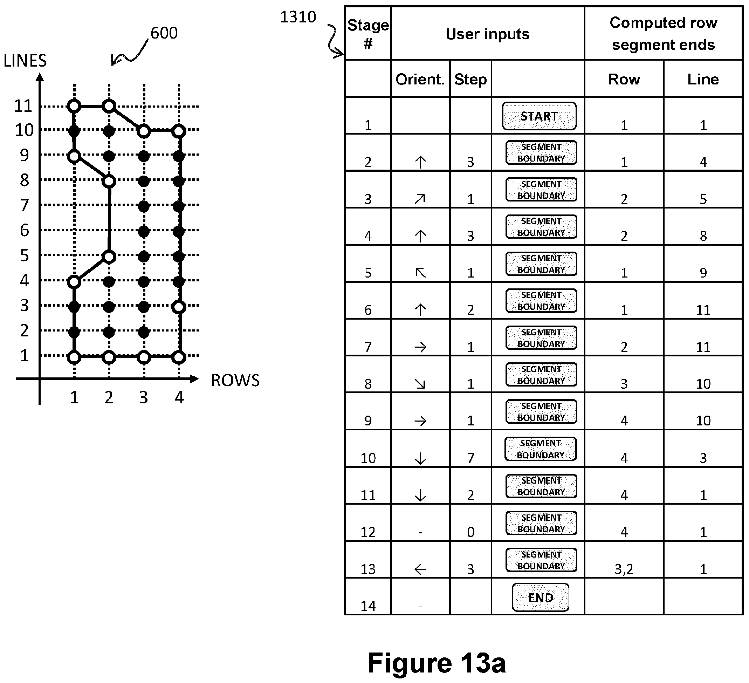

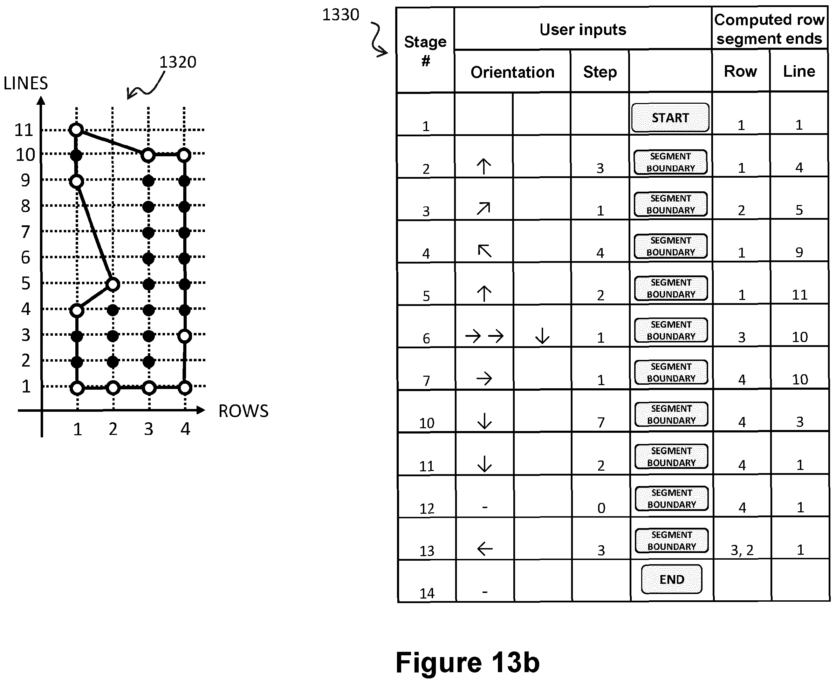

In order to illustrate the recording process, two examples of recording are given in **Figures 13a** and **13b** for two parcel examples.

**Figure 13a** shows the recording process during a user tour around the parcel 600 (previously used as illustration for the different embodiments).

The table 1310 shows, at different stages of the recording process, the user inputs and the coordinates of the row segment ends computed from the recorded data.

The first column is the process stage number (1 to 14) given here for information only, it is not used by the algorithm.

The second to fourth columns are the user inputs.

At first stage (#1), the user pushes on the start button. As the user starts always from a row segment boundary the coordinates, R1L1 is automatically recorded as a row segment boundary.

To go to next row segment boundary (R1L4), the user moves in line direction only along 3 plant locations; then he presses the up arrow, enters 3 and pushes on "segment boundary" button to record the data.

To go to next row segment boundary (R2L5), the user moves in row direction once and in line direction along 1 plant location then he presses the up-right arrow, enters 1 and pushes on "segment boundary" button to record the data.

In the same way, the user inputs data in relation with all the row segment ends until he comes back to the starting row segment end where he presses the "End" button (instead of the "segment boundary" button).

It can be noticed that, thanks to this user interface, the user has to press buttons 37 times while with the user interface proposed in **Figure 6b**, he has to press buttons 42 times. Since the parcel used to illustrate the recording method is very small, the difference in the number of user inputs is small but for an actual parcel, the gain in number of user inputs may be significant.

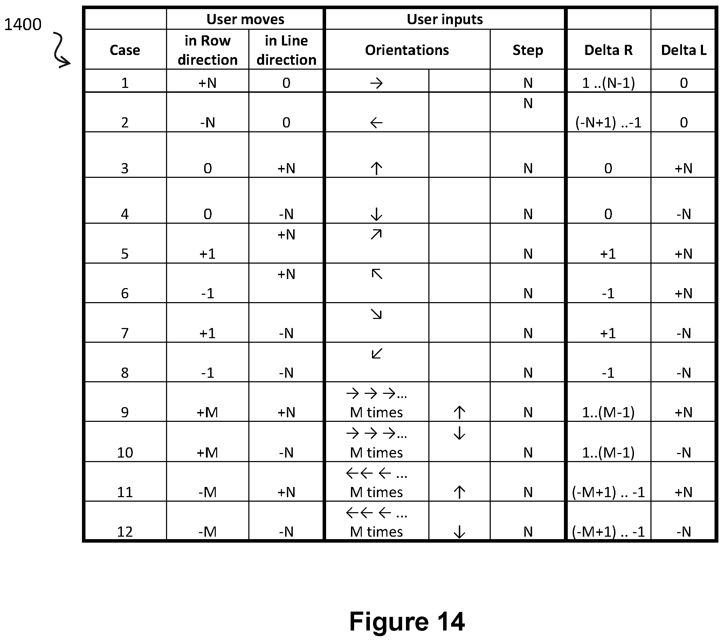

The fifth and sixth columns of the table 1310 are the coordinates of the row segment ends computed from the user inputs following the process described in **Figures 14****.** Note that the list of computed row segment ends is the same than the one obtained when using the user interface described in **Figure 6b****.**

**Figure 13b** shows the recording process during a user tour around another parcel example 1320.

The table 1330 shows, at different stages of the process, the user inputs and the coordinates of the row segment ends computed from the recorded data.

The first column is the process stage number (1 to 14) given here for information only, it is not used by the algorithm.

The three first stages are the same as described in **Figure 13a****.**

At the fourth stage (#4), the user moves in row direction once and in line direction along 4 plant locations (to go to R1L9); then he presses the up-left arrow, enters 4 and pushes on "segment boundary" button to record the data.

At the fifth stage (#5), the user moves in line direction only along 2 plant locations to go to R1L11; then he presses the up arrow, enters 2 and pushes on segment "boundary button" to record the data.

At the sixth stage (#6), the user moves in row direction along two inter-row and in line direction along one plant location to go to R3L10; then he presses twice the right arrow, once the down arrow, enters 1 and pushes on "segment boundary" button to record the data.

In the same way, the user inputs data in relation with all the row segment ends until he comes back to the starting row segment end where he presses the "End" button (instead of the "segment boundary" button).

The fifth and sixth columns of the table 1330 are the coordinates of the row segment ends computed from the user inputs following the method described **Figure 14****.**

**Figure 14** illustrates the processing of the data recorded with the user interface of **Figure 11** to get the row segment ends coordinates according to third embodiments of the invention.

The principle is that displacement data (orientation, step number N) is interpreted as line or row increment/decrement values to go to the next row segment end from the current one.

These values are named Delta R for the difference between the row coordinates and Delta L for the difference between the line coordinates.

The coordinates of the starting point being known (for instance Row 1, Line 1), the coordinates of the "n+1" row segment end (boundary) is computed by adding the Delta R/Delta L values to the "n" row segment end (boundary) Row/Line coordinates.

The table 1400 shows the relationship between the orientations (arrows), the input displacement step number N and the Delta R, Delta L values.

There are particular inputs which require a particular process: the horizontal orientations (arrows).

The horizontal orientations (arrows) are used in two cases: either to record a move in row direction only (cases 1 and 2) or to indicate a move in row and line directions (cases 9 to 12).
- In case the user is walking along a row direction only (i.e. following end of rows with aligned plant locations), he inputs only the orientation and the number of inter-rows distances he walks along before reaching an unaligned row segment end or the end of the tour.
- In case the user is walking in row and line directions, he inputs the orientation by pressing:
   ∘ the suited horizontal arrow key as many times as the number of inter-rows distances he walks along;
   ∘ the appropriate vertical arrow key; and
   ∘ the number of inter-lines distances he walks along (using the keypad).

Since the algorithm which provides the segments description and the number of plants is based on the row segment ends, all row segment ends related to this move has to be generated.

The generation may be performed as the following (orientations are described as arrows):
- In case of unique horizontal right arrow and a recorded number N (case 1), Delta R values are all integers comprised in the interval between 1 and the value (N-1), Delta L values are '0'.
- In case of unique horizontal left arrow and a recorded number N (case 2), Delta R values are all integers comprised in the interval between -1 and the value (-N+1), Delta L values are '0'.
- In case of multiple horizontal arrows, M being the number of horizontal arrows:
   ∘ In case of multiple horizontal right arrows followed by a vertical up arrow and a recorded number N (case 9), Delta R values are all integers comprised in the interval between 1 and the value (M-1), Delta L values are 'N'.
   ∘ In case of multiple horizontal right arrows followed by a vertical down arrow and a recorded number N (case 10), Delta R values are all integers comprised in the interval between 1 and the value (M-1), Delta L values are '- N'.
   ∘ In case of multiple horizontal left arrows followed by a vertical up arrow and a recorded number N (case 11), Delta R values are all integers comprised in the interval between -1 and the value (-M+1), Delta L values are 'N'.
   ∘ In case of multiple horizontal right arrows followed by a vertical down arrow and a recorded number N (case 12), Delta R values are all integers comprised in the interval between -1 and the value (-M+1), Delta L values are '-N'.
- For other cases (cases 3 to 8) the Delta R, Delta L values are defined as follows:
   ∘ In case of up (down) arrows followed by a number N (cases 3 and 4), Delta R values is '0', Delta L values is 'N' (-N),
   ∘ In case of up-right arrow followed by a number N (case 5), Delta R values is '1' , Delta L values is 'N',
   ∘ In case of up-left arrow followed by a number N (case 6), Delta R values is `-1' , Delta L values is 'N',
   ∘ In case of down-right arrow followed by a number N (case 7), Delta R values is `1' , Delta L values is `-N',
   ∘ In case of down-left arrow followed by a number N (case 8), Delta R values is `-1' , Delta L values is `-N'.

Other embodiments of the invention are now described that use a concept of plant zones for providing an alternate and advantageous way of receiving user inputs, with the corresponding user interface.

A plant zone is the shortest zone of contiguous plant locations in the same row delimited by consecutive reference lines (for instance post lines) and/or row segment ends.

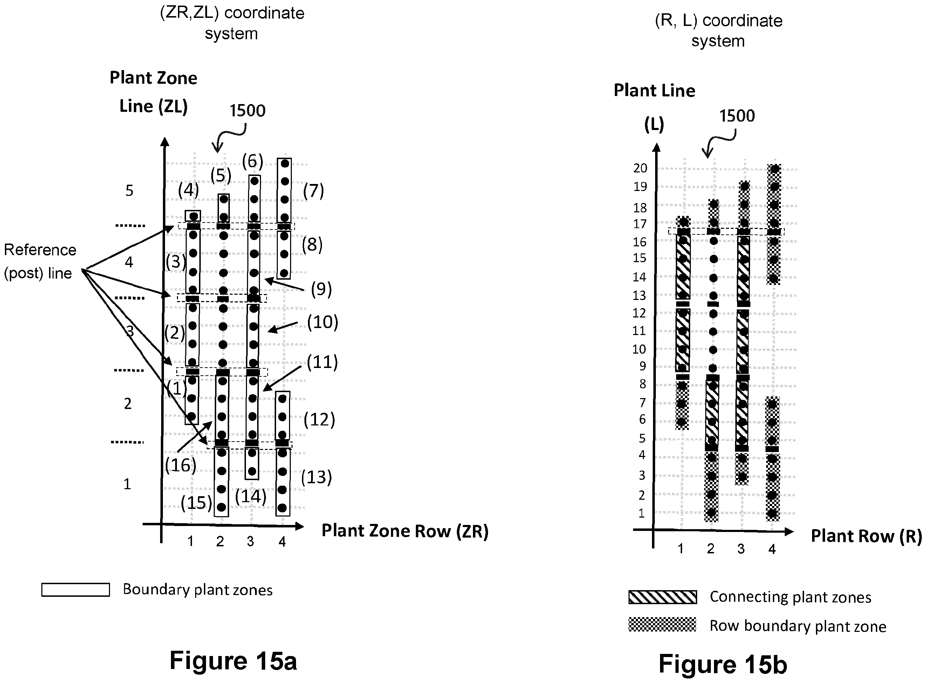

**Figures 15a** and **15b** illustrate the concept of plant zones used in these embodiments according to two coordinate systems. A parcel 1500 is shown as an example.

In the following embodiments, plant zones are subsets of row segments. The plant zones are delimited by reference lines which cross part of or the entire width of the parcel, and are distributed along the row dimension from the bottom to the top of the parcel. Reference lines are positioned between plants, and not on plant lines. In practice, such as in the case of vineyards, these reference lines are called post lines, and are generally positioned every 4, 5 or 6 plants, as an example. In **Figure 15a****,** the spacing between each pair of consecutive reference lines is identical across the entire parcel and equal to that of 4 plants. But the spacing between pairs of consecutive reference lines may vary.

Unlike in the example of **Figure 15a****,** reference lines may not run the entire width of the parcel. In practice, such as in the case of vineyards or other trellised crops, reference lines are post lines materialized by aligned posts positioned between some plants. The role of the post is to support wires which support the growth of the plants in the same row. If the end of a row segment (always materialized by an end-of-row post) is very close to the position of a reference line, then there is no use in planting a post so close to an end-of-row post, and so the reference line may not be materialized by a post in that area.

While theoretically possible, in practice a plant zone may not consist of plants from two separate row segments, as this would result in an overuse of posts as mentioned in the previous paragraph. Therefore, the assumptions are that a plant zone may be a subset of only one row segment, and therefore, all plant zones consist of contiguous plant locations.

A new (ZR, ZL) coordinate system is defined to provide coordinates for plant zones. Because plant zones are subsets of row segments, the ZR coordinate of a plant zone is the R coordinate of the row segment it belongs to. Each plant zone can thus be easily identified by its coordinates ZL and ZR in a (ZR, ZL) coordinate system.

**Figure 15a** illustrates the parcel 1500 in a (ZR, ZL) coordinate system. As illustrated, ZL have values from 1 to 5 since the parcel 1500 is divided into 5 plant zone lines. Plant zone Line 1 being the one which starts at the lower value of the line coordinate. For example, the (ZR,ZL) coordinates of Plant Zone (11) are: ZR = 3 and ZL = 2. For comparative purposes, **Figure 15b** illustrates the same parcel 1500 in the RL coordinate system. Splitting the plantation into plant zones makes it easier for the user to identify the location of a plant in a plant zone as the area is smaller. For instance, the plant location with coordinates (2, 15) in the RL coordinate system, is identified by the third position in the plant zone with coordinates (2, 4) in the (ZR, ZL) coordinate system. Note that positions of plant locations in a plant zone are numbered, for example, starting with the number one for the plant location inside the plant zone with the lowest line coordinate.

For the purposes of the following embodiments, the concepts of row boundary plant zone, line boundary plant zone, corner boundary plant zone, boundary plant zone and connecting plant zone are introduced.

A row boundary plant zone is a plant zone at any of the two ends of a row segment. Therefore, the row boundary plant zones of parcel 1500 are:
- Plant Zones (1) and (4) for Plant Zone Row 1,
- Plant Zones (15) and (5) for Plant Zone Row 2,
- Plant Zones (14) and (6) for Plant Zone Row 3,
- Plant Zones (7), (8), (12) and (13) for Plant Zone Row 4; Plant Zone Row 4 has 4 row boundary plant zones because it has 2 row segments.

A line boundary plant zone is a plant zone at any of the two ends of a line of plant zones, a line of plant zones being characterized by all the plant zones with the same Plant Zone Line (ZL) coordinate. Therefore, the line boundary plant zones of parcel 1500 are:
- Plant Zones (15) and (13) for Plant Zone Line 1,
- Plant Zones (1) and (12) for Plant Zone Line 2,
- Plant Zones (2) and (10) for Plant Zone Line 3,
- Plant Zones (3) and (8) for Plant Zone Line 4,
- Plant Zones (4) and (7) for Plant Zone Line 5.

A line boundary plant zone may also be a row boundary plant zone. This is the case for Plant Zones (15), (13), (1), (12), (4), (7), and (8).

A corner boundary plant zone is a plant zone which is not a row boundary plant zone, which is not a line boundary plant zone, and which is the only plant zone contiguous to one row boundary plant zone and one-line boundary plant zone. Contiguity means a difference between plant zone coordinates of exactly one unit in at most one dimension (Plant Line or Plant Row, but not both). For purposes of illustration:
- Plant Zone (16) is a corner boundary plant zone, because it is the only plant zone contiguous to both Plant Zone (1) and Plant Zone (15), which are both row and line boundary plant zones; the only other potential candidate would have been the plant zone of coordinates (ZR=1, ZL=1), but it does not exist for parcel 1500.
- The Plant Zone of coordinates (ZR=2, ZL=4), although contiguous to Plant Zones (3) and (5), is not a corner boundary plant zone, because there exists another contiguous plant zone to Plant Zones (3) and (5), which is Plant Zone (4).

A boundary plant zone is either a row boundary plant zone, line boundary plant zone or a corner boundary plant zone.

A connecting plant zone is a boundary plant zone which is not a row boundary plant zone.

Therefore, the set of boundary plant zones is the disjoint union of row boundary plant zones and connecting plant zones. The inclusion of corner boundary plant zones in the list of boundary plant zones ensures that any boundary plant zone is contiguous to at least two other boundary plant zones. In this way, a unique path (with two possible directions, clockwise or counterclockwise) around the parcel exists from one boundary plant zone to the next, while ensuring contiguity between consecutive boundary plant zones. In the case of parcel 1500, the clockwise path through boundary plant zones is:
(1), (2), (3), (4), (5), (6), (7), (8), (9), (10), (11), (12), (13), (14), (15), (16).

The contiguity in the sequence of boundary plant zones ensures that valid user inputs can be processed correctly to generate accurate plant location coordinates and characteristics data.

Note that the plant location counts of row boundary plant zones are a function of the geographical limits and shape of the parcel at its top and bottom boundaries. Furthermore, in practice, the inter-plant distance in row boundary plant zones, may vary a little below the parcel's inter-plant distance in order to enable for example one more plant location than the plant zone would allow at the row boundary if one would strictly apply the parcel's inter-plant distance decided for the field to the row boundary plant zone.

The plant location counts of connecting plant zones are independent of the geographical limits and shape of the parcel at its top and bottom boundaries. Each plant location count of a connecting plant zone is representative of all the plant zones in the same Plant Zone Line, including those which will not be counted. It is this feature of connecting plant zones that enables finding the coordinates of all plant locations without having to count all plant zones of a parcel, simply by performing plant location counts at the perimeter of the parcel.

### Fourth embodiments

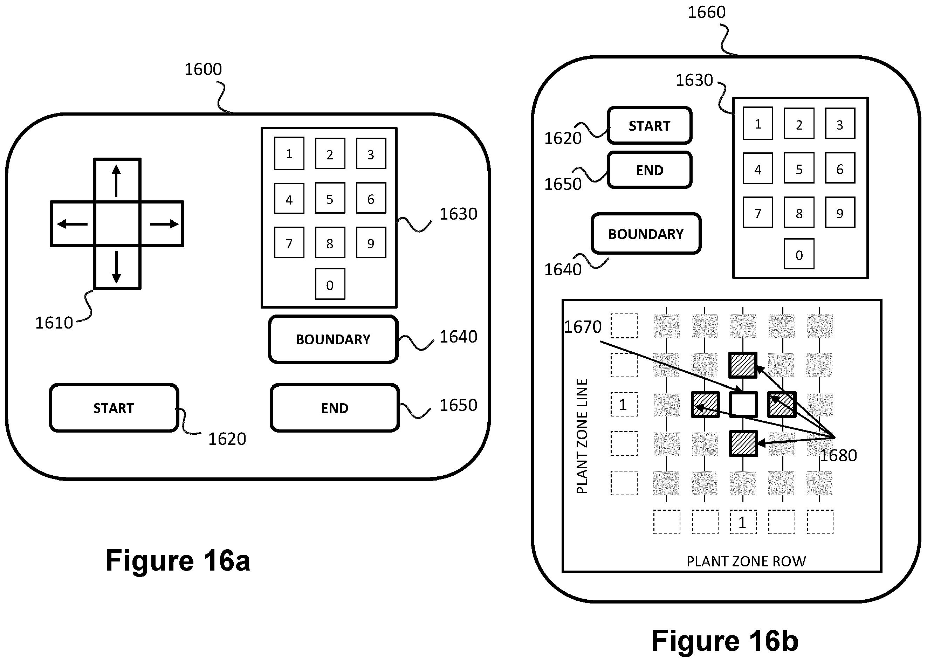

**Figures 16a** and **16b** show two user interface examples which may be used to input the expected data according to the method proposed in these embodiments.

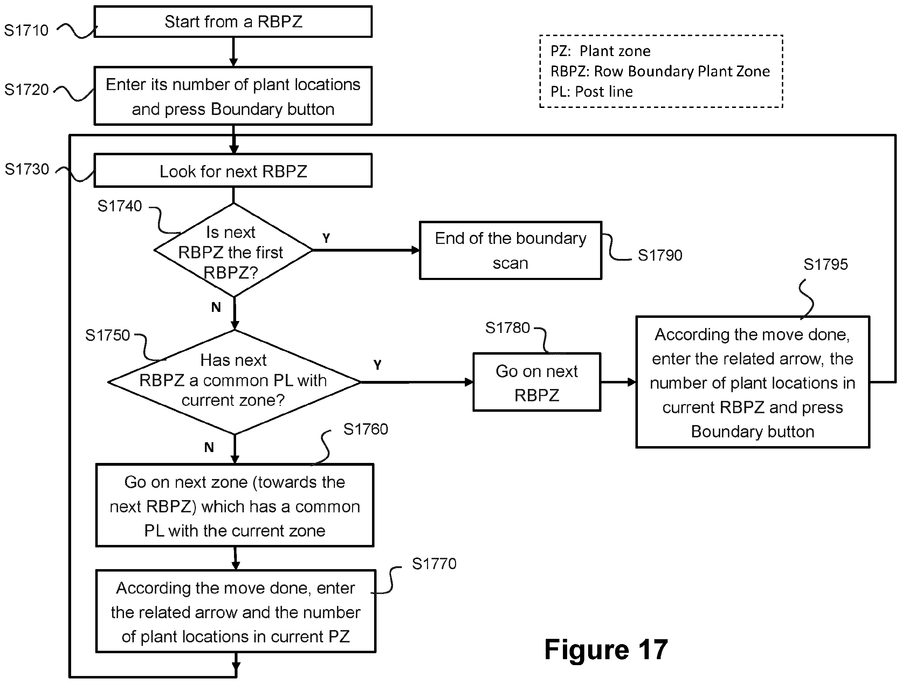

**Figure 16a** shows a first example of user interface 1600. It is assumed that this user interface is used to input data when executing the flowchart of **Figure 17****.**

Use of the buttons is summarized below:
- The two buttons "Start" 1620 and "End" 1650 enable to start/stop the collection of data.
- The four arrow buttons 1610 are used to record the orientation of the move (displacement) from one Plant Zone to the next one.
- The keypad 1630 is used to enter the number of plant locations in the Plant Zones.
- The "boundary" button 1640 is used to tag a zone as a Row Boundary Plant Zone (by default all Plant Zones not tagged as "Row Boundary Plant Zones" are considered as Connecting Plant Zones).

Note that in the description of these fourth embodiments, "Boundary" button relates to Row Boundary Plant zones.

**Figure 16b** shows a second example of user interface 1660 which enables an alternative way to enter user inputs and also to get a local view of the configuration of the parcel.

The buttons Start, End, Boundary and the keypad are used as given in the description of the **Figure 16a****.**

The first difference between this user interface and the one of **Figure 16a** is the input of the orientation of displacement: instead of giving the orientation of the move by pressing the adequate arrow button, the user enters the orientation by pressing one of the buttons 1680 (buttons filled with diagonal stripes), the button being selected with regard to its position in relation to the central box 1670 (white-filled).

Once this button pressed, the user interface is updated; all values previously entered are shifted in the opposite direction (for instance if the user presses the button above the central box, all values are shifted downward) and the user enters the plant location count in the central box using the keypad 1630.

The second difference is the display of the local view of the configuration of the parcel.

In this user interface example, the display shows an area of 25 plant zones but it may be reduced to 9 (3×3) or extended to any size.

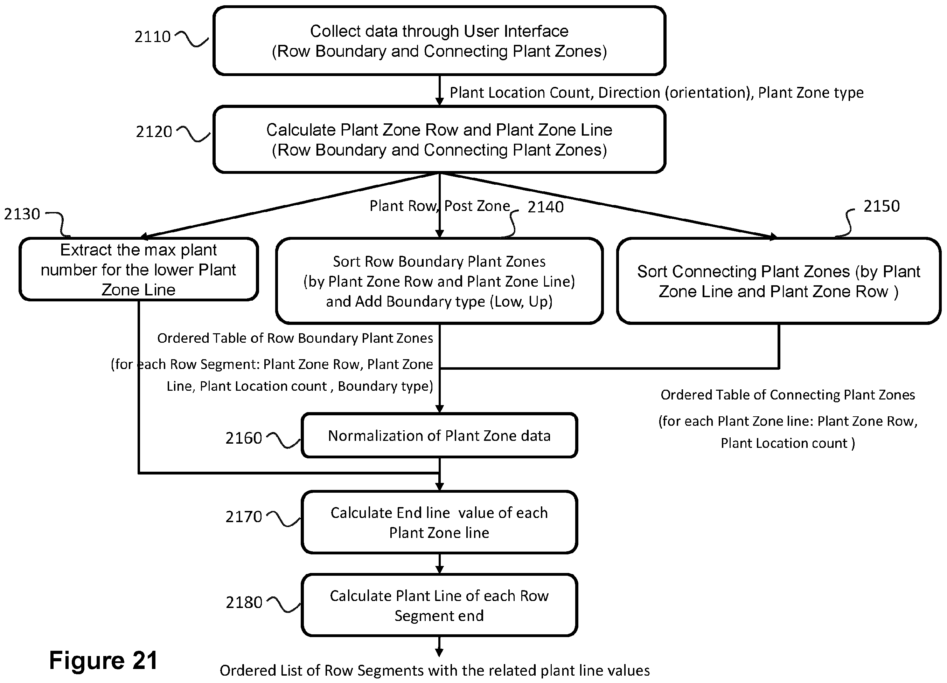

In this example, the Plant Zone Row and the Plant Zone Line values related to the shown part of the parcel are also displayed. Indeed, these values can be easily updated after each user's entry as explained in the description of the algorithm to get the Row segment end coordinates from the recorded data (**Figure 21****,** step 2120).

This user interface enables to see what are the number of plant locations which have been recorded for the plant zones around the current one as well as the Plant Zone Row and the Plant Zone Line numbers. This data may be used by the user to check his records.

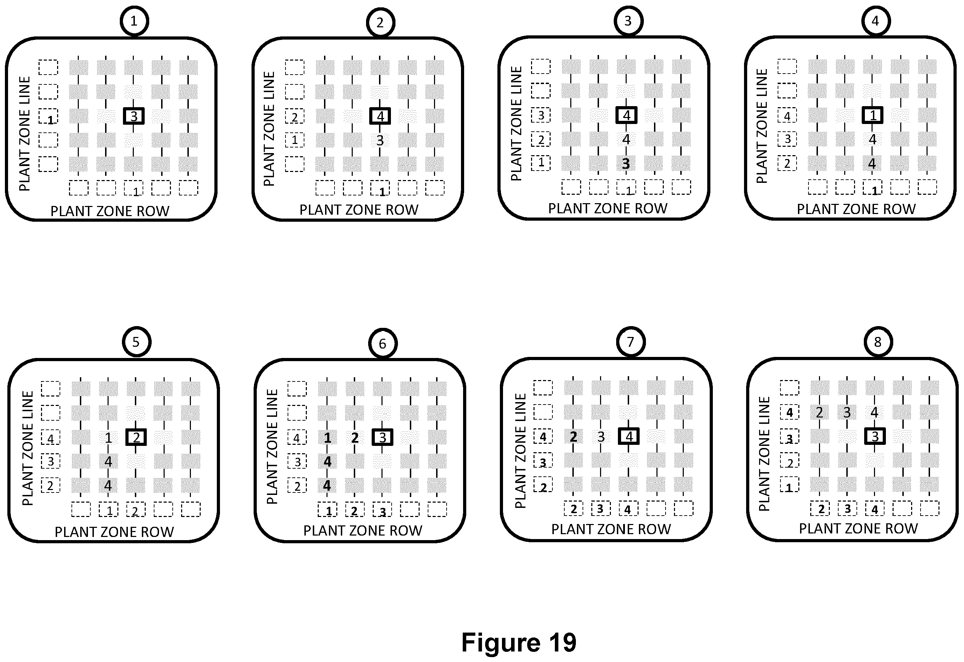

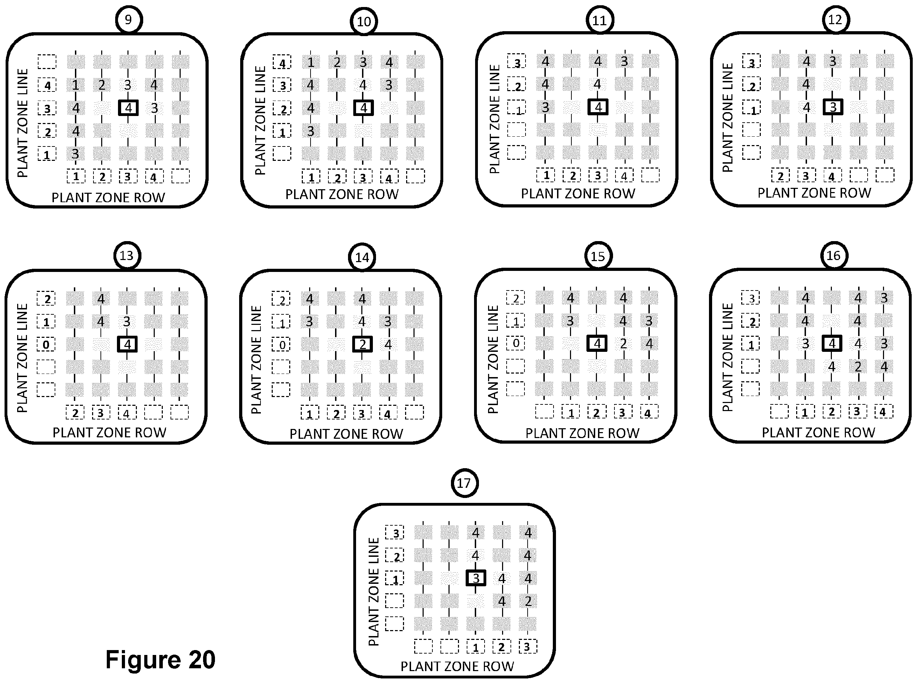

This will be illustrated in **Figures 19** and **20****.**

**Figure 17** illustrates the process followed by the user to collect the expected data when he walks around the parcel.

In first step S1710, the user selects the starting Row Boundary Plant Zone as well as the direction of the path around the parcel he will take and press the "Start" button 1620. It is not necessary to store the direction (clockwise or counterclockwise) of the path in the system, but the user has to keep the same direction until he has returned to the starting Row Boundary Plant Zone.

In next step S1720, he enters the number of plant locations in the selected Row Boundary Plant Zone and press the "Boundary" button 1640.

In next step S1730 he looks for the next Row Boundary Plant Zone (which may be on the same row or an adjacent row) in the turning direction he selected.

In next step S1740, he checks if the next Row Boundary Plant Zone is the starting Row Boundary Plant Zone.

If the result of the test S1740 is positive, the turn of the parcel is finished and in step S1790 he presses the "End" button 1650.

If the result of the test S1740 is negative, in next step S1750, he checks if the next Row Boundary Plant Zone share a common Post Line with the current zone.

If the result is positive, in next step S1780, he goes to that Row Boundary Plant Zone.

Then, in next step S1795, the user:
- enters the orientation of his displacement to reach this Row Boundary Plant Zone using one of the four arrows (up, down, left, right);
- enters the number of plant locations in the Row Boundary Plant Zone,
- press the "Boundary" button.
- Then, coming back to step S1730, he looks again for the next Row Boundary Plant Zone.

If the result of test S1750 is negative, in next step S1760, he goes to the closest Connecting plant Zone (the zone which shares a common Post Line with the current zone in the turning direction he selected).

In next step S1770, he:
- enters the direction (orientation) he moved to go to this Connecting Plant Zone using one of the four arrows (up, down, left, right);
- enters the number of plant locations in this Connecting Plant Zone;
- then, coming back to step S1730, he looks again for the next Row Boundary Plant Zone.

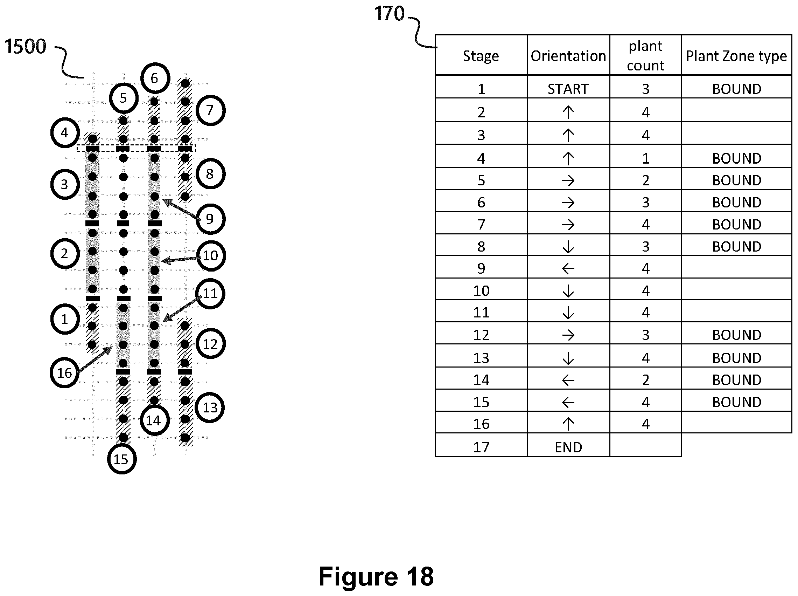

**Figure 18** illustrates the course of the user around the example parcel 1500, the plant zones considered and the data recorded.

Numbers around the parcel correspond to the number of each Plant Zone considered by the user as well as the stage of the recording. In this example, the user starts the tour from the bottom left of the parcel and turn around clockwise.

The table 170 is the list of the data recorded during the tour. As explained in the description of **Figure 17****,** for each plant zone excepted the first one, the user records the orientation of his move to reach it, the number of plant locations and the type of Plant Zone (in fact he enters only "Boundary" for the Row Boundary Plant Zone and doesn't enter anything in case of a Connecting Plant Zone). The Plant Zone type indicates thus whether a plant zone is a row boundary or a connecting plant zone.

**Figures 19** and **20** illustrate the user interface appearance (central part only) with the values of the recorded plant location counts all along the round of the parcel.

On this figure, the number on top of each view is the number of the Plant Zone/recording stage, the values inside the boxes are the recorded plant location count and the dashed outline boxes give the Plant Zone Row and the Plant Zone Line numbers related to each recorded Plant Zone location. The value in the central box is the value of the current Plant Zone, other values correspond to neighbor Plant Zones with regard to their position in relation with the current Plant Zone.

**Figure 21** shows the algorithm to get the row segment end coordinates from the recorded data.

The first step 2110 is the record of data (plant location count, direction, type of the Plant Zone) as explained in the description of the **Figures 15a** to **20****.** During that first step, all zones not tagged "Boundary" type ("Boundary" type means row boundary plant zone) are tagged "Connecting" type ("Connecting type means connecting plant zone).

Next step (step 2120) uses the recorded data to compute the values of the Plant Zone Row and the Plant Zone Line for each move of the user (each stage).
For each stage:
If the recorded direction is up (respectively down) arrow:
   - The Plant Zone Row value is the same than in previous stage,
   - The Plant Zone Line value is incremented (respectively decremented) by one.
If the recorded direction is right (respectively left) arrow:
   - The Plant Zone Row value is incremented (respectively decremented) by one.
   - The Plant Zone Line value is the same than in previous stage.

Then output of step 2120 is, for each stage, values of Plant Zone Row and Plant Zone Line.

These values complete recorded data for each stage which become:
- "Plant location count, direction, Plant Zone type, Plant Zone Row, Plant Zone Line."

The data may be organized in a table for further processing, each row being a stage, and each column being one of the elements listed above.

After step 2120, three steps (2130, 2140, 2150) are run independently.

The step 2130 consists in extracting the maximum value of the Plant locations count recorded for the lower Plant Zone Line index, whatever the row index and the stage.

The step 2140 consists in:
- extracting, from the data delivered by step 2120, the Plant Zones of Row "Boundary" type,
- sorting them in ascending order firstly with regard to their Plant Zone Row value and secondly with regard to their Plant Zone Line value,
- add Boundary type value for each, these values being alternatively "Low" and "Up", first value being "Low".

The output data may be organized in a table for further processing, each row being a row segment end, and each column being one of the data "Plant Zone Row, Plant Zone Line, Plant location count, Boundary type". This table is named the Sorted Row Boundary Plant Zone list.

The step 2150 consists in:
- extracting, from the data delivered by step 2120, the Plant Zones of "Connecting" type,
- sorting them in ascending order firstly with regard to their Plant Zone Line value and secondly with regard to their Plant Zone Row value,

The output data may be organized in a table for further processing, each row being a connecting zone, and each column being one of "Plant Zone Line, Plant Zone Row, Plant location count, Connecting type".

In next step 2160, the "Plant Zone" data may be normalized.

The normalization of the Plant Zone values (Row and Line coordinates) is optional but it may be needed in case the implementation of the algorithm doesn't accept null or negative values. It may be also used as it is easier for human to use positive integers for the coordinates of the plants.

The algorithm is similar to the one used for Row and Line normalization which is described **Figure 10****.**

Next step 2170 consists in determining the value of the last line of each Plant Zone.

For the lower Plant Zone (the one with the lower Plant Zone Line value), the value of the last line is the maximum value of the Plant locations count determined in step 2130,

For the other Plant Zones, for each of them, the value of the last line of the Plant Zone is the sum of the value of the last line of the previous Plant Zone and of the value of 'plant location count" for the current Plant Zone.

In next step 2180, the Line value of each row segment end is calculated.

As a row segment end is always a Plant Zone with "Boundary" type, the Sorted Row Boundary Plant Zone list delivered in step 2140 is used for the determination of the line value of each row segment end.

For each Row Boundary Plant Zone, the value of the Plant Line is determined as follows:
- If the Boundary type is 'Low', the value of the plant line is equal to the difference between the value of the last line of the Plant Zone corresponding to the Row Boundary Plant Zone and the number of plant locations in this Plant Zone, plus one: Plant Line=End_Line (Plant Zone) - Plant_Count (Plant Zone) +1.
- If the Boundary type is `Up', the value of the plant line is equal to the sum of the value of the last line of the previous Plant Zone and the number of plant locations in this Plant Zone: Plant Line=End_Line (Plant Zone-1) + Plant_Count (Plant Zone).

The information related to the Plant Line value is added in the Sorted Row Boundary Plant Zone list.

Then, at the output of the step 2180, the Row segment end coordinates are delivered. These values are the Row segment end coordinates which will be input in the algorithm described **Figure 7** to get the RL plantation map.

### Fifth embodiments

Fifth embodiments are similar to fourth embodiments except that inputting row boundary plant zone positions is no more needed. These embodiments advantageously require smaller amount of data to input, and thus they are less prone to errors.

Roughly, the data recording method is the same than that of the fourth embodiments excepted the following facts:
- the user doesn't need to record the zone type by pressing the "Boundary" button,
- the user shall start the tour at a row segment end, and
- the first plant zone shall be recorded twice, at the start ('start' button) and at the end (direction with regard to the last move done to come back to the start) of the tour, unlike previous embodiments where it was only recorded at the start.

The type of plant zone (either boundary or connecting) will be determined automatically by a new algorithm.

As the way to capture the data is quite the same than for the fourth embodiments, one may refer to **Figure 17** to recall the data record process (just do nothing instead of pressing "Boundary" button").

A new concept is used in that embodiment: the concept of "Plant Zone Group". It is defined as follows:
When the user walks along a row to record data about the Plant Zones (i.e. direction to join it, number of plant locations), sometimes, he has to change of row and sometimes he stays on the same row. As long as he is continuously on the same row, he is in a Plant Zone Group. A "Plant Zone Group" is defined as a list made of all consecutive Plant Zones belonging to the same Row in the Plant Zone list.

Then when the user is moving along one or several plant zone lines along a given plant row, he is in the same "Plant Zone Group". If there are several row segments on a same row number, the user has to move along neighbor rows to join the row segments, consequently there are several "Plant Zone Group" for this row number. In other words, each time the user changes of row, a new « Plant Zone Group » is considered.

The automatic determination of the plant zone type (row boundary or connecting) is based on the monitoring of the following variables which are computed from the collected data:
- Plant Zone Row: Row number of the Plant Zone considered by the user. It can be easily computed from the starting row number and the user's move direction; it increases or decreases when the user moves in Row direction (right or left arrows)
- Plant Zone Line: Line number of the Plant Zone considered by the user. It can be easily computed from the starting line number and the user's move direction; it increases or decreases when the user moves in line direction (up or bottom arrows). Warning: The Plant Zone Line is not equivalent to the plant location line number (used in embodiment 1 and 2) as a plant zone may include several plant locations.
- Row_dir: this variable is computed to record the change of direction along the row axis;
- Min and max Plant Zone Line: for each "Plant Zone Group", the minimum and maximum values of Plant zone lines are computed.
- Plant Zone Line In and Out: for each "Plant Zone Group", the values of the Plant Zone Line when entering and exiting of it (which means the first and last Plant Zone Line values) are recorded.
- Boundary_In and Boundary Out: for each "Plant Zone Group", Boundary_In and Boundary_Out respectively record the boundary type (Top or Bottom) when entering and exiting the row. A process (described below in step 2260) determines automatically if the Boundary is at the top or the bottom of the parcel.

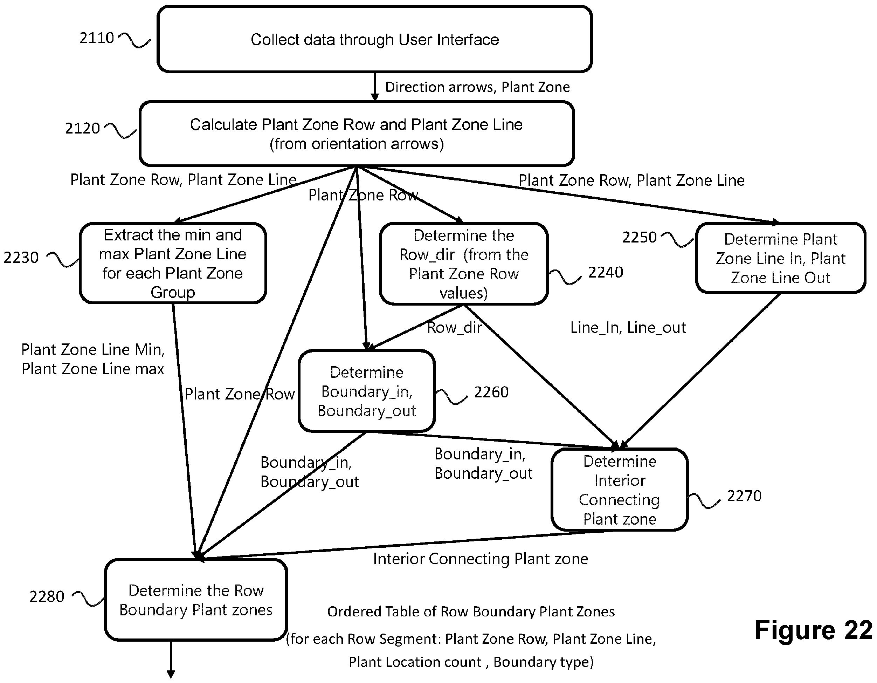

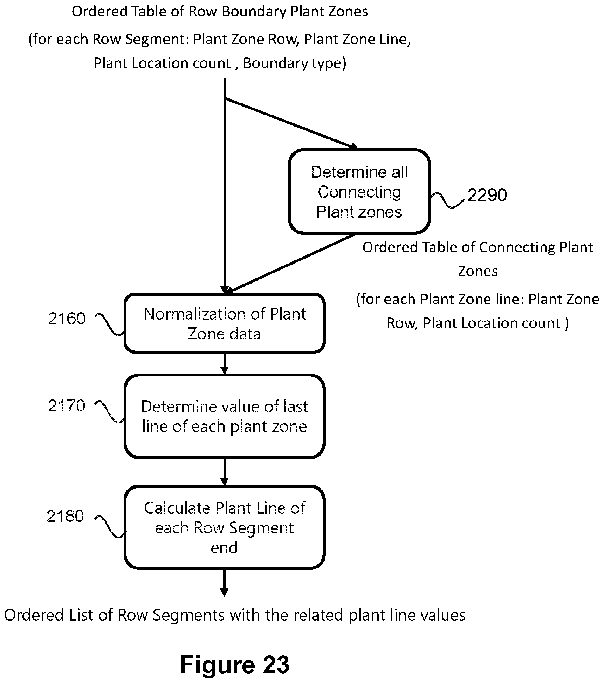

**Figures 22** and **23** illustrate, using flowcharts, a method to get row segment end coordinates from the recorded data without requiring the user to record the Plant zone type.
**Figure 22** shows the first part of the algorithm while **Figure 23** shows the second part.

In step 2230, for each "Plant Zone Group" the minimum and maximum values of Plant Zone Line are computed by this way:
When entering a new Plant Zone Group (which is found when the Plant Zone Row value is different from the previous one), both min and max Plant Zone Line values are set to the first Plant Zone Line value. Then when moving within the row, the min (ref max) Plant Zone Line value is updated if the new Plant Zone Line value is smaller (ref greater) than the min (ref max) Plant Zone Line value recorded. Min and max Plant Zone Line values obtained at the last stage of the "Plant Zone Group" are recorded.

In step 2240, the Row_dir variable is computed from the Plant Zone Row variable. For each stage (as previously, a stage corresponds to a record of direction/plant location number), if the Plant Zone Row variable is the same than the previous stage (no change of row), the Row_dir value is the same than the previous one; else the Row_dir value is the new direction recorded.

In step 2250, for each "Plant Zone Group", the "Plant Zone Line In" and "Plant Zone Line Out"" values are computed by this way:
- When entering a new Plant Zone Group (which is found when the Plant Zone row value is different from the previous one), the "Plant Zone Line In" value is set to the Plant Zone Line value.
- The "Plant Zone Line Out" value is set to the Plant Zone Line value.

In step 2260, the Boundary_In and Boundary_Out are computed. In fact, there are two main steps in that computation. Since, when the user records data, there is no information about his location with regard to the parcel, there is no information about the nature of the boundary: at the bottom of the row segment or at its top. Then, in a first step, only the change of boundary type is computed: boundary types are 'A' or 'B'; and in a second step, the relationship between "A/B" and "bottom/top" is determined.
The process uses the following variables:
- "Boundary_In type", "Boundary_Out type": variables which indicate if there is a change in the boundary type. Their values can be 'A' or `B' (no meaning for these letters)
- "identified_plant_zone_1" and "identified_plant_zone_2": variables which indicate identified boundary types. Their values can be 'b' or `t' (for 'bottom' and 'top').
- Bound_type_A and Bound_type_B: variables which give the relationship between the type (A or B) and the boundary position ('bottom' or 'top').

1. Determination of the change of boundary type: firstly, the values of Boundary_In type and Boundary_Out type are arbitrarily set to `A' (or `B').
   Next values of these variables are computed as follows:
   Inside each Plant Zone Group, "Boundary_In type" remains unchanged and equal to its value at the input in the Plant Zone Group. When there is a change of Plant Zone Group (which is found when the "Plant Zone row" value is different from the previous one) "Boundary_In type" takes the value of the previous "Boundary_Out type".
   As long as the user stays along the same row (Row_dir value is the same than the next one), the Boundary_Out type value is complementary to the Boundary_In type value (it means if Boundary_In type ='A', Boundary_Out type='B' and reciprocally). If the user moves to another row (Row_dir value different from the next one), "Boundary_Out type" takes the value of "Boundary_In type".
2. Determination of the relationship between "A/B" and "bottom/top":
   - For each Plant Zone Group, determine the number of steps done inside: nb_steps starts at one at each new Plant Zone Group and increments at each stage
   - For all stages:
      ∘ If the current plant zone line corresponds to the Min Plant Zone Line value,
         and if the stage corresponds to the end stage of the current Plant Zone Group (which, for instance, can be detected when the value of the variable "nb_steps" is greater than its value for the next stage)
         and if "Boundary_Out type" and "Boundary_In type" variables have same value, then create a variable "identified_plant_zone_1" and attributes it the type 'bottom'
      ∘ If above conditions are not fulfilled, the variable "identified_plant_zone_1" gets blank value.
      ∘ If the current plant zone line corresponds to the Max Plant Zone Line value,
         and if the stage corresponds to the end stage of the current Plant Zone Group (which, for instance, can be detected when the value of the variable "nb_steps" is greater than its value for the next stage),
         and if "Boundary_Out type" and "Boundary_In type" variables have same value,
         create a variable "identified_plant_zone_2" and attributes it the type 'top';
      ∘ If above conditions are not fulfilled, the variable "identified_plant_zone_2" gets blank value.
      ∘ if "Boundary_Out type" and "Boundary_In type" variables both have value 'A'
         ▪ if the variable "identified_plant_zone_1" has 'bottom' value, a variable named "bound_type_A" takes the value 'bottom' (which means that when a boundary is of type A it is a 'bottom' boundary)
         ▪ else if the variable "identified_plant_zone_2" has 'top' value, this variable "bound_type_A" takes the value 'top' (which means that when a boundary is of type A it is a 'top' boundary)
      ∘ if "Boundary_Out type" and "Boundary_In type" variables both have value 'B'
         ▪ if the variable "identified_plant_zone_1" has 'bottom" value, a variable named "bound_type_B" takes the value 'bottom"
         ▪ else if the variable "identified_plant_zone_2" has 'top' value, this variable "bound_type_B" takes the value 'top'.
   - Compute:
      ∘ the number of times the variables "Bound_type_A" and "Bound_type_B" has the value 'bottom" → nb_boundtype_A_bottom, nb_boundtype_B_bottom
      ∘ the number of times the variables "Bound_type_A" and "Bound_type_B" has the value 'top' → nb_boundtype_A_top, nb_boundtype_B_top
   - If nb_boundtype_A_bottom is greater than zero, it means that type 'A' means bottom
   - If nb_boundtype_A_top is greater than zero, it means that type 'A' means top
   - If nb_boundtype_B_bottom is greater than zero, it means that type 'B' means bottom
   - If nb_boundtype_B_top is greater than zero, it means that type `B' means bottom.
   - Using the found relationship between "A/B" and "bottom/top", attribute the "top" or "bottom" or blank values to the Boundary_In and Boundary_Out variables.

In step 2270, the Interior Connecting Plant Zones are determined. This/these zones are defined as Connecting Plant Zone used to go from a row segment to another one when these two row segments are in the same row. In this case, the value of the line corresponding to the Plant Zone Line which is at the top of the lowest row segment (then the type of this Boundary is 'Top') is smaller than the value of the line corresponding to the Plant Zone Line which is at the bottom of the highest row segment (then the type of this Boundary is 'Bottom').

Then the index of the stages which correspond to the Interior Connecting Plant zones are determined by this way:
For each stage, when there is a change of row (Row_dir value different from the next one), the Plant Zone is determined as an Interior Connecting Plant zone if Boundary_In ='bottom' and "plant_zone_line_in is greater than plant_zone_line_out" or if Boundary_In ='top' and "plant zone_line_in is lower than plant_zone_line_out".

In step 2280, the Row Boundary plant Zone are determined.

Firstly, the row, line, type (top or bottom) of the Boundary_In zones are determined as follows:
For each stage,
- if the zone is not an Interior Connecting Zone, when entering a new Plant Zone Group (which is found when the Plant Zone row value is different from the next one), the value of the type of the boundary in is set to the value of the Boundary_In.
- if the Boundary_In is 'bottom' or 'top', its row value is the plant_zone_row.
- if the Boundary_In is 'bottom', its line value is the plant_zone_line min,
- if the Boundary_In is 'top', its line value is the plant zone_line max.
Secondly, the row, line, type (top or bottom) of the Boundary_Out zones are determined similarly:
For each stage,
- if the zone is not an Interior Connecting Zone, when entering a new Plant Zone Group (which is found when the Plant Zone row value is different from the next one), the value of the type of the boundary is set to the value of the boundary_Out.
- if the Boundary_Out is 'bottom' or 'top', its row value is the plant_zone_row.
- if the Boundary_Out is `bottom', its line value is the plant_zone_line min,
- if the Boundary_Out is 'top', its line value is the plant zone_line max.

Thirdly, the Boundary_In and Boundary_Out zones are gathered in a table to form the list of the boundary zones. For each boundary zone, the table gives the Plant Zone Row, the Plant Zone line and the boundary type.

Finally, this table is sorted by Plant Zone Row and Plant Zone Line to get the ordered table of the Row Boundary Plant Zones. This table is equivalent to the one computed in step 2140 of the fourth embodiments (**Figure 21**)**.**

In step 2290, the Connecting Plant Zones are identified as all the plant zones which have not been identified as Row Boundary Plant Zones and their (Row, Lines) coordinates are extracted from the recorded data. Then this table is sorted by Plant Zone Line and Plant Zone Row to get the ordered table of the Connecting Plant Zones. This table is equivalent to the one computed in step 2150 of the fourth embodiments (**Figure 21**)**.**

Since the steps 2110,2120,2230,2240,2250,2260,2270,2280,2290 deliver the same tables (Ordered Table of Row Boundary Plant Zones and Ordered Table of Connecting Plant Zones) than the steps 2110 to 2150 described figure 21, the end of the processing to get the Ordered list of Row segments is the same than the one described **Figure 21** (steps 2160 to 2180).

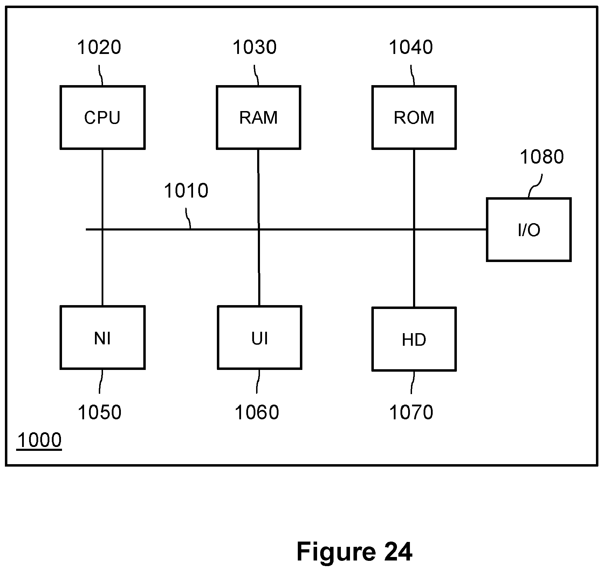

**Figure 24** is a schematic block diagram of a computing device 1000 for implementing one or more embodiments of the invention.

The computing device 1000 may be a device such as a micro-computer, a workstation or a light portable device.

The computing device 1000 comprises:
- a communication bus 1010;
- a central processing unit 1020 or CPU, such as a microprocessor;
- a random access memory 1030 or RAM;
- a read only memory 1040 or ROM;
- a network interface 1050 or NI;
- a user interface 1060 or UI;
- a hard disk 1070 or HD; and
- an input/output module 1080 or I/O.

The RAM 1030 stores the executable code of the method of embodiments of the invention as well as the registers adapted to record variables and parameters necessary for implementing the method according to embodiments of the invention, the memory capacity thereof can be expanded by an optional RAM connected to an expansion port for example.

The ROM 1040 stores computer programs for implementing embodiments of the invention.

The network interface 1050 is typically connected to a communication network over which digital data to be processed are transmitted or received. The network interface 1050 can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU 1020.

The user interface 1060 may be used for receiving inputs from a user or to display information to a user, the hard disk 1070 may be provided as a mass storage device, and the I/O module 1080 may be used for receiving/sending data from/to external devices such as a video source or display (not shown).

The executable code may be stored either in the ROM 1040, on the hard disk 1070, on a removable digital medium such as a disk, or even received by means of a communication network, via the network interface 1050, in order to be stored in one of the storage means of the communication device 1010, such as the hard disk 1070, before being executed.

The central processing unit 1020 is adapted to control and direct the execution of the instructions or portions of software code of the program or programs according to embodiments of the invention, the instructions of which are stored in one of the aforementioned storage means. After powering on, the CPU 1020 is capable of executing instructions from main RAM memory 1030 relating to a software application afterthose instructions have been loaded from the program ROM 1040 or the hard disc 1070 for example. Such a software application, when executed by the CPU 1020, causes the steps of the flowcharts of the embodiments of the invention to be performed.

Any step of these flowcharts may be implemented in software by execution of a set of instructions or program by a programmable computing machine, such as a PC ("Personal Computer"), a DSP ("Digital Signal Processor"), a microcontroller, or else implemented in hardware by a machine or a dedicated component, such as an FPGA ("Field-Programmable Gate Array") or an ASIC ("Application-Specific Integrated Circuit").

In a preferred embodiment, the apparatus is a programmable apparatus which uses software to implement the invention. However, alternatively, the present invention may be implemented in hardware (for example, in the form of an Application Specific Integrated Circuit or ASIC).

Although the present invention has been described hereinabove with reference to specific embodiments, the present invention is not limited to the specific embodiments, and modifications will be apparent to a skilled person in the art which lie within the scope of the present invention, which is defined by the following claims.

## Claims

1. A method of determining characteristics data of an agricultural field comprising aligned plant locations, the method comprising:
receiving (S210), from a user interface (410), user inputs including a succession of displacement data, wherein the succession of displacement data maps plant locations at a boundary of the agricultural field; and
determining (S220) characteristics data of the agricultural field based on, at least, the succession of displacement data included in the received user inputs.

2. The method of Claim 1, wherein the displacement data includes a displacement orientation and a displacement step.

3. The method of Claim 2, wherein the aligned plant locations are mapped to a two-dimension (row, line) coordinate system.

4. The method of Claim 3, wherein a row of plant locations is composed of one or more row segments of contiguous plant locations.

5. The method of Claim 4, wherein the displacement orientation is relative to the row and/or the line dimension, and the displacement step is a number of plant locations.

6. The method of Claim 5, wherein the user inputs further include an indication of a row segment end.

7. The method of Claim 5, wherein the agricultural field rows are divided by reference lines, such as post lines, and wherein a plant zone is the shortest zone of contiguous plant locations in the same row delimited by consecutive reference lines and/or row segment ends.

8. The method of Claim 7, wherein the plant zone is:
a row boundary plant zone if the plant zone is at any of the two ends of a row segment;
a line boundary plant zone if the plant zone is a plant zone at any of the two ends of a line of plant zones;
a corner boundary plant zone if the plant zone is a plant zone which is not a row boundary plant zone, which is not a line boundary plant zone, and which is the only plant zone contiguous to one row boundary plant zone and one line boundary plant zone;
a boundary plant zone if the plant zone is either a row boundary plant zone, line boundary plant zone or a corner boundary plant zone; and/or
a connecting plant zone if the plant zone is a boundary plant zone which is not a row boundary plant zone.

9. The method of Claim 8, wherein the plant zones are mapped to a two-dimension (row plant zone, line plant zone) coordinate system.

10. The method of Claim 9, wherein the displacement orientation is relative to the row plant zone or the line dimension, and the displacement step is a number of plant zones.

11. The method of Claim 10, wherein the user inputs further include a number of plant locations in a plant zone and/or an indication of a row boundary plant zone.

12. The method of Claim 6, wherein determining characteristics data of the agricultural field comprises: assigning, based on user inputs, (row, line) coordinates to boundary plant locations; and determining characteristics data based on the assigned coordinates.

13. The method of Claim 11, wherein determining characteristics data of the agricultural field comprises:
assigning, based on displacement data, (row plant zone, line plant zone) coordinates to boundary plant zones; and
determining characteristics data based on the assigned coordinates and user inputs.

14. The method of Claim 12 or 13, wherein characteristics data comprise a plantation map of the agricultural field.

15. The method of Claim 11, wherein the user interface comprises a row or a row plant zone button and a line or a line plant zone button, wherein hitting on the one or both of the buttons causes receiving user inputs.

16. The method of Claim 15, wherein the user interface is a graphical user interface and wherein the graphical user interface comprises display elements visually displaying current (row, line) or (row plant zone, line plant zone) coordinates in response to user input and/or wherein the graphical user interface comprises display elements visually displaying a grid representing the plant locations or the plant zones and adapted to receive user inputs.

17. A device for generating characteristics data of an agricultural field comprising aligned plant locations, the device comprising:
a user interface (410) adapted to receive (S210) user inputs including a succession of displacement data, wherein the succession of displacement data maps plant locations at a boundary of the agricultural field; and
means for determining characteristics data of the agricultural field based on at least the succession of displacement data included in the received user inputs (S220).

18. A non-transitory computer-readable medium storing a program which, when executed by a microprocessor or computer system in a device according to claim 17, causes the device to perform the method of Claim 1.

## Patentansprüche

1. Verfahren zum Bestimmen von Kenndaten eines landwirtschaftlichen Feldes, das ausgerichtete Pflanzenstandorte aufweist, wobei das Verfahren Folgendes aufweist:
Empfangen (S210) von Benutzereingaben von einer Benutzerschnittstelle (410), die eine Abfolge von Verschiebungsdaten enthalten, wobei die Abfolge von Verschiebungsdaten Pflanzenstandorte an einer Grenze des landwirtschaftlichen Feldes abbildet; und
Bestimmen (S220) von Kenndaten des landwirtschaftlichen Feldes auf Grundlage von mindestens der Abfolge von Verschiebungsdaten, die in den empfangenen Benutzereingaben enthalten sind.

2. Verfahren nach Anspruch 1, wobei die Verschiebungsdaten eine Verschiebungsorientierung und einen Verschiebungsschritt enthalten.

3. Verfahren nach Anspruch 2, wobei die ausgerichteten Pflanzenstandorte auf ein zweidimensionales (Reihen-, Zeilen-)Koordinatensystem abgebildet werden.

4. Verfahren nach Anspruch 3, wobei eine Reihe von Pflanzenstandorten aus einem oder mehreren Reihensegmenten von angrenzenden Pflanzenstandorten zusammengesetzt ist.

5. Verfahren nach Anspruch 4, wobei die Verschiebungsorientierung relativ zu der Reihen- und/oder der Zeilendimension ist, und der Verschiebungsschritt eine Anzahl von Pflanzenstandorten ist.

6. Verfahren nach Anspruch 5, wobei die Benutzereingaben ferner eine Angabe eines Reihensegmentendes enthalten.

7. Verfahren nach Anspruch 5, wobei die landwirtschaftlichen Feldreihen durch Referenzlinien, wie beispielsweise Pfostenlinien, unterteilt sind und wobei eine Pflanzenzone die kürzeste Zone angrenzender Pflanzenstandorte in derselben Reihe ist, die durch aufeinanderfolgende Referenzlinien und/oder Reihensegmentenden begrenzt ist.

8. Verfahren nach Anspruch 7, wobei die Pflanzenzone:
eine Reihengrenz-Pflanzenzone ist, falls die Pflanzenzone an einem der zwei Enden eines Reihensegments liegt;
eine Zeilengrenz-Pflanzenzone ist, falls die Pflanzenzone eine Pflanzenzone an einem der beiden Enden einer Zeile von Pflanzenzonen ist;
eine Eckgrenz-Pflanzenzone ist, falls die Pflanzenzone eine Pflanzenzone ist, welche keine Reihengrenz-Pflanzenzone ist, welche keine Zeilengrenz-Pflanzenzone ist und welche die einzige Pflanzenzone ist, die an eine Reihengrenz-Pflanzenzone und eine Zeilengrenz-Pflanzenzone angrenzt;
eine Grenzpflanzenzone ist, falls die Pflanzenzone entweder eine Reihengrenz-Pflanzenzone, eine Zeilengrenz-Pflanzenzone oder eine Eckgrenz-Pflanzenzone ist; und/oder
eine Verbindungs-Pflanzenzone ist, falls die Pflanzenzone eine Grenzpflanzenzone ist, welche keine Reihengrenz-Pflanzenzone ist.

9. Verfahren nach Anspruch 8, wobei die Pflanzenzonen auf ein zweidimensionales (Reihenpflanzenzonen-, Zeilenpflanzenzonen-)Koordinatensystem abgebildet werden.

10. Verfahren nach Anspruch 9, wobei die Verschiebungsorientierung relativ zu der Reihenpflanzenzone oder der Zeilenpflanzenzone ist, und der Verschiebungsschritt eine Anzahl von Pflanzenzonen ist.

11. Verfahren nach Anspruch 10, wobei die Benutzereingaben ferner eine Anzahl von Pflanzenstandorten in einer Pflanzenzone und/oder eine Angabe einer Reihengrenz-Pflanzenzone enthalten.

12. Verfahren nach Anspruch 6, wobei das Bestimmen von Kenndaten des landwirtschaftlichen Feldes Folgendes aufweist:
Zuweisen, auf Grundlage von Benutzereingaben, von (Reihen-, Zeilen-)Koordinaten an Grenzpflanzenstandorte; und
Bestimmen von Kenndaten auf Grundlage der zugewiesenen Koordinaten.

13. Verfahren nach Anspruch 11, wobei das Bestimmen von Kenndaten des landwirtschaftlichen Feldes Folgendes aufweist:
Zuweisen von (Reihenpflanzenzonen-, Zeilenpflanzenzonen-)Koordinaten an Grenzpflanzenzonen auf Grundlage der Verschiebungsdaten; und
Bestimmen von Kenndaten auf Grundlage der zugewiesenen Koordinaten und Benutzereingaben.

14. Verfahren nach Anspruch 12 oder 13, wobei die Kenndaten eine Bepflanzungskarte des landwirtschaftlichen Feldes aufweisen.

15. Verfahren nach Anspruch 11, wobei die Benutzerschnittstelle eine Reihen- oder eine Reihenpflanzenzonen-Taste und eine Zeilen- oder eine Zeilenpflanzenzonen-Taste aufweist, wobei das Drücken auf eine oder beide der Tasten ein Empfangen von Benutzereingaben bewirkt.

16. Verfahren nach Anspruch 15, wobei die Benutzerschnittstelle eine grafische Benutzerschnittstelle ist und wobei die grafische Benutzerschnittstelle Anzeigeelemente aufweist, die aktuelle (Reihen-, Zeilen-) oder (Reihenpflanzenzonen-, Zeilenpflanzenzonen-)Koordinaten in Reaktion auf Benutzereingaben visuell anzeigen und/oder wobei die grafische Benutzerschnittstelle Anzeigeelemente aufweist, die ein Gitter visuell anzeigen, das die Pflanzenstandorte oder die Pflanzenzonen darstellt und angepasst ist, um Benutzereingaben zu empfangen.

17. Vorrichtung zum Erzeugen von Kenndaten eines landwirtschaftlichen Feldes, das ausgerichtete Pflanzenstandorte aufweist, wobei die Vorrichtung Folgendes aufweist:
eine Benutzerschnittstelle (410), die angepasst ist, Benutzereingaben zu empfangen (S210), die eine Abfolge von Verschiebungsdaten enthalten, wobei die Abfolge von Verschiebungsdaten Pflanzenstandorte an einer Grenze des landwirtschaftlichen Feldes abbildet; und
Mittel zum Bestimmen von Kenndaten des landwirtschaftlichen Feldes auf Grundlage von mindestens der Abfolge von Verschiebungsdaten, die in den aufgenommenen Benutzereingaben (S220) enthalten sind.

18. Nicht-transitorisches computerlesbares Medium, das ein Programm speichert, welches, wenn es von einem Mikroprozessor oder einem Computersystem in einer Vorrichtung nach Anspruch 17 ausgeführt wird, die Vorrichtung veranlasst, das Verfahren nach Anspruch 1 durchzuführen.

## Revendications

1. Procédé de détermination de données de caractéristiques d'un champ agricole comprenant des emplacements de plants alignés, le procédé comprenant :
la réception (S210), depuis une interface utilisateur (410), d'entrées d'utilisateur comprenant une succession de données de déplacement, dans lequel la succession de données de déplacement cartographie des emplacements de plants en limite du champ agricole ; et
la détermination (S220) de données de caractéristiques du champ agricole sur la base de, au moins, la succession de données de déplacement comprises dans les entrées d'utilisateur reçues.

2. Procédé selon la revendication 1, dans lequel les données de déplacement comprennent une orientation de déplacement et un pas de déplacement.

3. Procédé selon la revendication 2, dans lequel les emplacements de plants alignés sont cartographiés dans un système de coordonnées bidimensionnel (rangée, ligne).

4. Procédé selon la revendication 3, dans lequel une rangée d'emplacements de plants est composée d'un ou plusieurs segments de rangée d'emplacements de plants contigus.

5. Procédé selon la revendication 4, dans lequel l'orientation de déplacement est relative à la dimension de rangée et/ou de ligne, et le pas de déplacement est un nombre d'emplacements de plants.

6. Procédé selon la revendication 5, dans lequel les entrées d'utilisateur comprennent en outre une indication d'une extrémité de segment de rangée.

7. Procédé selon la revendication 5, dans lequel les rangées de champ agricole sont divisées par des lignes de référence, telles que des lignes de piquets, et dans lequel une zone de plants est la zone la plus courte d'emplacements de plants contigus dans la même rangée délimitée par des lignes de référence consécutives et des extrémités de segment de rangée.

8. Procédé selon la revendication 7, dans lequel la zone de plants est :
une zone de plants en limite de rangée si la zone de plants est au niveau de l'une quelconque des deux extrémités d'un segment de rangée ;
une zone de plants en limite de ligne si la zone de plants est une zone de plants au niveau de l'une quelconque des deux extrémités d'une ligne de zone de plants ;
une zone de plants délimitée par un coin si la zone de plants est une zone de plants qui n'est pas une zone de plants délimitée par une rangée, qui n'est pas une zone de plants délimitée par une ligne et qui est la seule zone de plants contiguë à une zone de plants délimitée par une rangée et une zone de plants délimitée par une ligne ;
une zone de plants en limite si la zone de plants est soit une zone de plants en limite de rangée, une zone de plants en limite de ligne soit une zone de plants en limite de coin ; et/ou
une zone de plants de liaison si la zone de plants est une zone de plants en limite qui n'est pas une zone de plants délimitée par une rangée.

9. Procédé selon la revendication 8, dans lequel les zones de plants sont cartographiées dans un système de coordonnées bidimensionnel (zone de plants de rangée, zone de plants de ligne).

10. Procédé selon la revendication 9, dans lequel l'orientation de déplacement est relative à la zone de plants de rangée ou à la dimension de ligne, et le pas de déplacement est un nombre de zones de plants.

11. Procédé selon la revendication 10, dans lequel les entrées d'utilisateur comprennent en outre un nombre d'emplacements de plants dans une zone de plants et/ou une indication d'une zone de plants en limite de rangée.

12. Procédé selon la revendication 6, dans lequel la détermination de données de caractéristiques du champ agricole comprend :
l'attribution, sur la base d'entrées d'utilisateur, de coordonnées (rangée, ligne) à des emplacements en limite de rangée ; et
la détermination de données de caractéristiques sur la base des coordonnées attribuées.

13. Procédé selon la revendication 11, dans lequel la détermination de données de caractéristiques du champ agricole comprend :
l'attribution, sur la base de données de déplacement, de coordonnées (zone de plants de rangée, zone de plants de ligne) à des zones de plants en limite ; et
la détermination de données de caractéristiques sur la base des coordonnées attribuées et des entrées d'utilisateur.

14. Procédé selon la revendication 12 ou 13, dans lequel des données de caractéristiques comprennent une carte de plantation du champ agricole.

15. Procédé selon la revendication 11, dans lequel l'interface utilisateur comprend un bouton de rangée ou de zone de plants en rangée et un bouton de ligne ou de zone de plants en ligne, dans lequel appuyer sur l'un ou les deux boutons provoque la réception d'entrées d'utilisateur.

16. Procédé selon la revendication 15, dans lequel l'interface utilisateur est une interface utilisateur graphique et dans lequel l'interface utilisateur graphique comprend des éléments d'affichage affichant visuellement des coordonnées (rangée, ligne) ou (zone de plants en rangée, zone de plants en ligne) en cours en réponse à une entrée d'utilisateur et/ou dans lequel l'interface utilisateur graphique comprend des éléments d'affichage affichant visuellement une grille représentant les emplacements de plants des zones de plants et conçue pour recevoir des entrées d'utilisateur.

17. Dispositif destiné à produire des données de caractéristiques d'un champ agricole comprenant des emplacements de plants alignés, le dispositif comprenant :
une interface utilisateur (410) conçue pour recevoir (S210) des entrées d'utilisateur comprenant une succession de données de déplacement, dans lequel la succession de données de déplacement cartographie des emplacements de plants en limite du champ agricole ; et
des moyens pour déterminer des données de caractéristiques du champ agricole sur la base d'au moins la succession de données de déplacement comprises dans les entrées d'utilisateur reçues (S220).

18. Support non transitoire lisible par ordinateur, stockant un programme qui, lorsqu'il est exécuté par un microprocesseur ou un système d'ordinateur dans un dispositif selon la revendication 17, amène le dispositif à réaliser le procédé selon la revendication 1.
